# FASCICULE DE BREVET EUROPEEN

(11) **EP 0 835 510 B1**
(45) Date de publication et mention de la délivrance du brevet: **29.12.1999**
(21) Numéro de dépôt: 96924017.5
(22) Date de dépôt: 24.06.1996
(51) Int. Cl.: G21C 3/356

(54) **GRILLE-ENTRETOISE D'UN ASSEMBLAGE DE COMBUSTIBLE POUR UN REACTEUR NUCLEAIRE ET ASSEMBLAGE DE COMBUSTIBLE**
ABSTANDHALTERGITTER FÜR EIN KERNREAKTORBRENNSTABBÜNDEL UND BRENNSTABBÜNDEL
SPACING GRID OF A FUEL ASSEMBLY FOR A NUCLEAR REACTOR AND FUEL ASSEMBLY

(30) Priorité: 29.06.1995 FR 9507857
(43) Date de publication de la demande: 15.04.1998
(73) Titulaire: FRAMATOME, 92400 Courbevoie (FR); COGEMA, F-78141 Velizy Villacoublay (FR)
(72) Inventeur: PETIT, Bernard, F-69530 Brignais (FR)
(74) Mandataire: Bouget, Lucien
(86) Numéro de dépôt international: FR9600989
(87) Numéro de publication internationale: WO9701849

(56) Documents cités:
- EP-A- 0 025 393
- EP-A- 0 027 203
- EP-A- 0 033 263
- EP-A- 0 088 021
- EP-A- 0 468 871
- WO-A-92/05566
- FR-A- 2 168 059
- PATENT ABSTRACTS OF JAPAN vol. 014, no. 581 (P-1147), 26 Décembre 1990 & JP,A,02 251789 (NUCLEAR FUEL IND LTD), 9 Octobre 1990,

## Description

L'invention concerne un assemblage de combustible pour un réacteur nucléaire dont l'ossature comporte des grilles-entretoises de structure et des grilles additionnelles de mélange de fluide réfrigérant du réacteur constituées par des plaquettes métalliques entrecroisées délimitant des cellules disposées de préférence suivant un réseau à mailles carrées.

Les assemblages de combustible des réacteurs nucléaires, en particulier des réacteurs nucléaires à eau légère, sont généralement constitués par un faisceau de crayons de combustible, c'est-à-dire de tubes en matériau absorbant peu les neutrons remplis par des pastilles de matière fissile. Le faisceau de crayons de combustible constituant un assemblage de combustible est maintenu par une ossature rigide comportant des grilles-entretoises espacées suivant la longueur du faisceau, des tubes-guides de direction longitudinale introduits et fixés à l'intérieur de certaines cellules des grilles-entretoises et des embouts d'extrémité assurant la fermeture de l'ossature et le maintien des crayons à chacune des extrémités de l'assemblage de combustible. Les grilles-entretoises de structure, qui sont constituées par des plaquettes entrecroisées délimitant des cellules disposées suivant un réseau généralement à mailles carrées, assurent le maintien transversal des crayons de combustible dans le faisceau, les crayons de combustible passant à l'intérieur des cellules des grilles. De cette façon, les crayons ont une disposition régulière dans les directions transversales, imposée par les grilles. Certaines des cellules sont occupées par des tubes-guides qui sont reliés à leurs extrémités aux embouts de fermeture de l'assemblage. Chaque cellule d'une grille-entretoise reçoit soit un crayon combustible, soit un tube-guide.

Pour assurer le maintien transversal et/ou axial des crayons combustibles à l'intérieur des cellules des grilles entretoises, il est nécessaire d'exercer sur ces crayons des forces de direction transversale et pour cela de prévoir des dispositifs de maintien portés par les parois des cellules de la grille et s'étendant vers l'intérieur de la cellule.

Chacune des cellules présente une dimension telle qu'un jeu important soit ménagé entre le crayon et les parois de la cellule. Ce jeu est nécessaire pour permettre l'écoulement du réfrigérant et pour faciliter le montage des crayons dans l'assemblage.

Les dispositifs de maintien des crayons à l'intérieur des cellules de la grille doivent assurer un maintien suffisant des crayons dans les cellules pour éviter des déplacements et des déformations des crayons de trop grande amplitude ainsi qu'un fléchissement exagéré sous l'effet des déformations d'origine thermique et de l'irradiation.

En outre, il est nécessaire d'éviter de mettre en oeuvre des forces de serrage trop importantes sur la gaine tubulaire du crayon risquant de produire un fléchissement de la gaine. Il est nécessaire également d'éviter un mode de fixation risquant d'introduire une usure exagérée de la gaine du crayon.

On a donc proposé des dispositifs de maintien des crayons de combustible dans les cellules de grilles-entretoises assurant un compromis acceptable entre ces exigences qui peuvent se montrer contradictoires. En outre, il est nécessaire d'utiliser pour constituer les grilles de structure et les éléments de maintien des crayons de combustible, des matériaux ayant des propriétés mécaniques satisfaisantes à la température d'utilisation du réacteur nucléaire et présentant une bonne résistance dans les conditions régnant dans le coeur du réacteur nucléaire, en présence du fluide de refroidissement du réacteur et de l'irradiation.

On a par exemple proposé de réaliser les grilles-entretoises en un alliage à haute limite élastique tel qu'un alliage de nickel, des ressorts et des butées rigides de maintien des crayons étant obtenus par découpage et repoussage de certaines portions de plaquettes constituant la grille. Une telle solution présente l'inconvénient d'introduire dans l'assemblage, un volume relativement important de matériau absorbant les neutrons.

On a proposé également de réaliser les plaquettes constituant les cellules de la grille en un matériau absorbant faiblement les neutrons tel qu'un alliage de zirconium, les éléments de maintien des crayons de combustible étant rapportés sur ces plaquettes en alliage de zirconium. Les éléments de maintien peuvent être constitués par des ressorts rapportés en alliage à forte élasticité et par des butées rigides formées sur les plaquettes constituant les différentes parois des cellules de la grille, de façon que, dans chaque cellule, les ressorts soient sur des parois opposées aux parois sur lesquelles sont formées les butées rigides. Les ressorts peuvent être constitués par exemple par une lame en matériau élastique entourant au moins partiellement la plaquette et refermée sur elle-même.

Dans le FR-A-2.474.229 (EP-0.033.263), on a proposé d'utiliser des ressorts doubles, c'est-à-dire des ressorts comportant deux parties actives destinées à venir en contact avec un crayon de combustible, dans deux cellules situées de part et d'autre de la plaquette sur laquelle est fixé le ressort, sur la plus grande partie des parois équipées de ressorts et des ressorts simples comportant une seule partie active sur les autres parois équipées de ressorts.

Les grilles-entretoises sont constituées par des plaquettes en alliage de zirconium entrecroisées délimitant le réseau régulier de cellules dans lesquelles sont introduits les crayons de combustible. Les cellules délimitées par les plaquettes sont de forme généralement parallélépipédique à section carrée et comportent des arêtes parallèles entre elles constituées chacune par l'intersection de deux plaquettes formant un croisillon constitué de quatre dièdres dont l'angle est généralement de 90°, ayant en commun une arête commune à quatre cellules de la grille.

Dans certains types d'assemblage de combustible, les grilles-entretoises sont toutes identiques et sont constituées par des plaquettes en alliage de zirconium entrecroisées et assemblées entre elles, sur lesquelles sont rapportés des ressorts.

On connaît également des assemblages combustibles qui comportent plusieurs types de grilles-entretoises ayant des fonctions différentes.

On connait en particulier un assemblage de combustible comportant à chacune de ses extrémités une grille de maintien des crayons réalisée entièrement en acier martensitique, des grilles intermédiaires entre les grilles d'extrémité constituant des grilles de structure comportant des plaquettes entrecroisées en alliage de zirconium et des ressorts rapportés et, intercalées entre les grilles de structure, dans la partie supérieure de l'assemblage combustible, des grilles de mélange du fluide de refroidissement du réacteur nucléaire.

Dans le cas des assemblages de combustible dont toutes les grilles sont des grilles de structure en alliage de zirconium comportant des ressorts rapportés, les ressorts sont les seuls éléments de maintien qui sont intercalés, dans chacune des cellules, entre le crayon logé dans la cellule et la paroi de la grille sur laquelle est fixé le ressort. Dans le cas où le crayon de combustible subit une sollicitation tendant à le déplacer vers une paroi de la cellule sur laquelle est monté un ressort, le ressort peut se déformer par compression de sorte que le crayon se déplace à l'intérieur de la cellule, dans une direction transversale.

Dans le cas des grilles de maintien différentes de grilles de structure, les ressorts viennent en appui sur les crayons et risquent également d'être déformés par des efforts extérieurs s'exerçant sur l'assemblage de combustible.

Dans le cas des cellules périphériques de la grille et en particulier dans le cas des cellules d'angle de la grille, les crayons de combustible sont susceptibles de subir des déplacements importants dus par exemple à un choc ou à un accrochage de l'assemblage combustible avec un second assemblage combustible ou avec un obstacle, pendant une manutention de l'assemblage.

Il peut en résulter une détérioration de la grille-entretoise de l'assemblage et des risques d'accrochage des grilles des assemblages pendant leur manutention.

Dans le cas des cellules internes d'une grille de structure, les ressorts rapportés sur les parois de la cellule peuvent également subir des efforts importants pendant la manutention de l'assemblage combustible ou pendant le fonctionnement du réacteur nucléaire.

Dans les WO-A-9205566 et FR-A2.168.059, on a décrit une grille-entretoise pour un assemblage de combustible d'un réacteur nucléaire refroidi par de l'eau bouillante constituée par des parois tubulaires assemblées entre elles de manière rigide, dans des positions juxtaposées. Des ressorts de maintien des crayons de combustible sont placés de manière à entourer des parties en vis-à-vis de deux parois adjacentes. Les parties en vis-à-vis des parois adjacentes sont repoussées de manière à constituer des bossettes en forme de calotte sphérique en face des branches du ressort.

Dans un assemblage de combustible pour réacteur à eau bouillante comportant de telles grilles ayant des parois tubulaires juxtaposées, le comportement mécanique des crayons de combustible et des ressorts portés par les parois est essentiellement différent du comportement mécanique des crayons dans un assemblage de combustible pour un réacteur nucléaire refroidi par de l'eau sous pression dont les grilles sont constituées par des plaquettes planes.

Les solutions proposées aux problèmes de déformation des ressorts et de déplacement des crayons ne peuvent donc être transposées du cas des assemblages de combustible pour réacteur à eau bouillante au cas des réacteurs à eau sous pression.

Dans le cas des grilles de structure, les plaquettes généralement en alliage de zirconium sont engagées deux à eux au niveau de leurs intersections, par l'intermédiaire d'une fente d'assemblage ; d'autre part, ces plaquettes doivent être soudées pour assurer une cohésion et une solidité suffisante de la grille-entretoise.

Du fait que les plaquettes ont une épaisseur faible, il est nécessaire de prendre certaines précautions lors de la réalisation du soudage, pour éviter de déformer ou d'oxyder les plaquettes. On cherche donc à limiter l'échauffement des plaquettes pendant le soudage et à répartir au mieux les contraintes thermiques dues au soudage de la grille.

Par exemple, dans le EP-A-0.088.021, on a proposé de réaliser un soudage par laser des plaquettes. La soudure de chacun des croisillons constitués par l'intersection de deux plaquettes est réalisée dans deux angles dièdres opposés du croisillon et dans ces deux angles seulement. Les soudures des croisillons sont réalisées successivement, suivant une séquence définie, en déplaçant la grille assemblée qui est maintenue par un cadre de montage, en-dessous d'une installation de soudage.

L'inconvénient d'un tel mode de fixation est que les plaquettes ne sont assemblées, au niveau de chacun des croisillons, que par une ligne de soudure située généralement dans un plan bissecteur de deux dièdres opposés. Il peut en résulter un manque de rigidité et de légers défauts de positionnement des plaquettes les unes par rapport aux autres.

Les grilles-entretoises à ressorts rapportés peuvent également comporter d'autres défauts inhérents à la constitution et à la réalisation de la grille-entretoise, au montage des ressorts, à la réalisation des bossettes d'appui des crayons de combustible, au montage des tubes-guides ou encore à la réalisation d'ailettes de mélange ou de guidage, par découpage des bords des plaquettes ou de la ceinture entourant la grille-entretoise.

Le but de l'invention est donc de proposer une grille-entretoise d'un assemblage de combustible pour un réacteur nucléaire, constituée par des plaquettes métalliques entrecroisées délimitant un réseau régulier de cellules de forme prismatique dont une partie comporte pour chaque cellule au moins un ressort de maintien d'un crayon de combustible destiné à être logé dans la cellule, le ressort étant disposé sur une paroi de la cellule constituée par une partie d'une plaquette métallique et ayant une partie active en saillie vers l'intérieur de la cellule, par rapport à la paroi, cette grille-entretoise permettant d'éviter des déplacements importants des crayons de combustible sur lesquels les ressorts sont en appui, dans le cas où ces crayons sont soumis accidentellement à des efforts importants.

Dans ce but, pour une partie au moins des cellules de la grille-entretoise, au moins une paroi plane sur laquelle est fixé un ressort comporte au moins une butée présentant une partie plane sensiblement parallèle à la paroi de la cellule sur laquelle est fixé le ressort, en saillie à l'intérieur de la cellule, de manière à limiter le débattement d'un crayon de combustible logé dans la cellule.

La butée peut être avantageusement obtenue par découpage et repoussage de la paroi de la cellule.

De manière préférentielle, dans le cas d'une grille-entretoise de forme polygonale ayant des cellules d'angle disposées dans chacun des angles de la grille comportant deux parois successives constituées par des parties disposées angulairement d'une ceinture périphérique de la grille et deux parois en vis-à-vis de la ceinture périphérique portant chacune un ressort, chacune des parois situées en vis-à-vis de la ceinture comporte au moins une butée en saillie à l'intérieur de la cellule. Les cellules de la grille comportant des butées de ressort peuvent se limiter aux cellules d'angle.

De préférence, l'ensemble des cellules périphériques de la grille-entretoise qui comportent chacune au moins une paroi externe constituée par une partie d'une ceinture périphérique de la grille et une paroi interne en vis-à-vis de la ceinture, est réalisé de manière que chacune des parois placées en vis-à-vis de la ceinture comporte au moins une butée réalisée par découpage et repoussage de la paroi à l'intérieur de la cellule. Dans ce cas, la présence de butées réduisant l'amplitude du déplacement des crayons de combustible et la déformation par compression des ressorts peut se limiter aux cellules périphériques.

De préférence, la grille-entretoise selon l'invention dont les arêtes des cellules parallèles entre elles sont constituées chacune par l'intersection de deux plaquettes formant un croisillon constitué de quatre dièdres ayant en commun une arête commune à quatre cellules est caractérisée par le fait que les plaquettes sont soudées entre elles deux à deux au niveau de chacune des arêtes, suivant un premier plan bissecteur de deux dièdres opposés dans une première zone d'extrémité de l'arête et suivant un second plan bissecteur des deux autres dièdres opposés dans une seconde zone d'extrémité de l'arête du croisillon opposée à la première.

De manière également préférentielle, chacune des plaquettes comporte également au niveau de chacune des arêtes des croisillons, des languettes de maintien permettant de rigidifier son assemblage avec une seconde plaquette, au niveau du croisillon. Les cellules recevant des tubes-guides comportent des parties embouties en forme de portions de cylindre destinées à réaliser le logement et :la fixation éventuelle du tube-guide. Les ailettes de mélange du fluide de refroidissement de l'assemblage de combustible et les bossettes de retenue des crayons sont réalisées de manière que les ailettes ne débordent pas sur l'espace occupé par les bossettes. Enfin, les ailettes de guidage situées sur la ceinture périphérique de la grille-entretoise peuvent être fixées par soudure sur une partie en saillie découpée dans une plaquette de la grille-entretoise.

L'invention est également relative à un assemblage de combustible pour un réacteur nucléaire comportant une ossature constituée par des tubes-guides parallèles entre eux, des grilles-entretoises réparties suivant la longueur des tubes-guides et des embouts d'extrémité fixés à l'extrémité des tubes-guides, dans lequel une partie au moins des grilles-entretoises de l'assemblage de combustible sont des grilles-entretoises selon l'invention faisant l'objet des revendications 1 à 22.

Afin de bien faire comprendre l'invention, on va maintenant décrire, à titre d'exemple non limitatif, en se référant aux figures jointes en annexe, une grille-entretoise perfectionnée d'un assemblage de combustible et un assemblage de combustible suivant l'invention.

La figure 1 est une vue en élévation latérale d'un assemblage de combustible d'un réacteur nucléaire refroidi par de l'eau sous pression comportant des grilles-entretoises suivant l'invention.

La figure 2 est une vue de dessus d'une partie d'une grille-entretoise suivant l'invention montrant en particulier la disposition des ressorts et butées de ressorts dans les cellules de la grille ainsi que les soudures des plaquettes.

La figure 3 est une vue en élévation d'une paroi d'une cellule périphérique de la grille-entretoise représentée sur la figure 2.

La figure 4 est une vue en coupe selon 4-4 de la paroi représentée sur la figure 3 sur laquelle est monté un ressort.

La figure 5 est une vue en coupe et en élévation d'une cellule périphérique d'une grille-entretoise suivant l'invention et suivant une variante de réalisation.

La figure 6 est une vue en coupe par un plan vertical d'une cellule périphérique et d'une cellule interne d'une grille-entretoise suivant l'invention et suivant un second mode de réalisation.

La figure 7 est une vue en coupe suivant 7-7 de la figure 2.

La figure 8 est une vue en plan d'une partie d'une plaquette d'une grille-entretoise suivant l'invention comportant des languettes de fixation suivant deux arêtes d'une cellule.

La figure 9 est une vue en plan d'une partie d'une plaquette constituant la paroi d'une cellule pour la fixation d'un tube-guide.

La figure 10 est une vue en coupe transversale de la figure 8.

La figure 11 est une vue en plan d'une partie d'une plaquette constituant la paroi d'une cellule de fixation d'un tube-guide réalisée suivant une variante de la figure 9.

La figure 12 est une vue en coupe transversale de la figure 11.

La figure 13 est une vue en coupe axiale d'une partie d'une grille-entretoise suivant l'invention et d'un tube-guide fixé dans une cellule de la grille-entretoise.

La figure 14 est une vue en plan d'une partie d'une grille-entretoise suivant l'art antérieur.

La figure 15 est une vue en plan d'une grille-entretoise suivant l'invention comportant des ailettes de mélange de grande taille et des bossettes de petite taille.

La figure 16 est une vue en coupe longitudinale d'une cellule périphérique d'une grille-entretoise suivant l'invention.

La figure 17 est une vue en coupe longitudinale d'une plaquette d'une grille-entretoise sur laquelle est fixé un ressort simple, suivant une variante de réalisation de l'invention.

La figure 18 est une vue en élévation et en coupe de la partie inférieure de la ceinture d'une grille-entretoise d'un premier assemblage de combustible et de la partie supérieure de la ceinture d'une grille-entretoise d'un second assemblage de combustible, en position d'approche relative pendant la manutention d'assemblages combustibles comportant des grilles-entretoises suivant l'invention.

La figure 19 est une vue suivant 19 de la figure 18.

La figure 20 est une vue en coupe d'une cellule d'une grille de brassage d'un assemblage suivant l'invention montrant une paroi munie de bossettes en deux parties.

La figure 21 est une vue en coupe suivant 21 de la figure 20.

La figure 22 est une vue de face en élévation d'une paroi d'une grille de mélange additionnelle d'un assemblage combustible suivant l'invention.

La figure 23 est une vue en coupe suivant 23-23 de la figure 22.

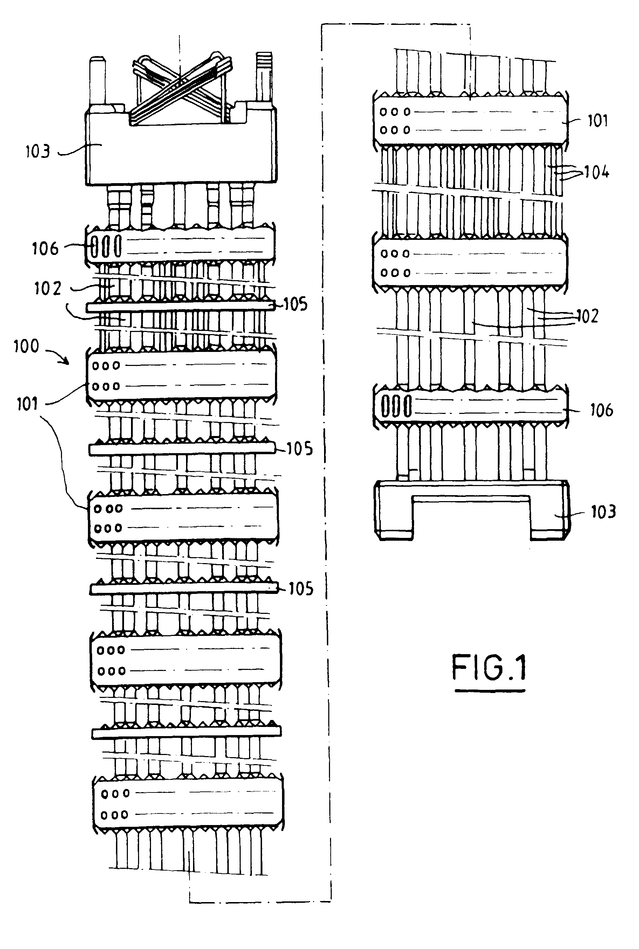

Sur la figure 1, on voit un assemblage de combustible d'un réacteur nucléaire à eau sous pression désigné de manière générale par le repère 100 et comportant une ossature constituée par des tubes-guides 102, des grilles-entretoises de structure 101, espacées de manière régulière suivant la longueur des tubes-guides, une grille d'extrémité 106 à chacune des extrémités des tubes-guides et des grilles additionnelles de mélange 105 intercalées chacune entre deux grilles de structure 101 dans la partie supérieure de l'assemblage combustible. Les extrémités des tubes-guides 102 sont fixées sur des embouts d'extrémité 103 assurant la fermeture des extrémités de l'assemblage combustible. Les crayons de combustible 104 dont la longueur est inférieure à la longueur des tubes-guides 102 sont introduits dans l'ossature de manière à se trouver en appui contre les grilles-entretoises. Les grilles-entretoises comportent des cellules disposées suivant un réseau régulier dans chacune desquelles est introduit un crayon de combustible 104 ou un tube-guide 102.

Les grilles d'extrémité 106 de l'ossature de l'assemblage de combustible sont réalisées entièrement en acier martensitique peu sensible à la relaxation sous irradiation et comportent des bossettes et des ressorts qui sont formés dans les plaquettes constituant la grille en acier martensitique. Les ressorts exercent sur les crayons de combustible des forces permettant de les maintenir dans les directions transversale et axiale à l'intérieur de l'ossature.

Les tubes-guides 102 sont fixés sur la grille d'extrémité inférieure 106.

La grille d'extrémité supérieure 106 peut éventuellement être montée coulissante sur les tubes-guides 102.

Les grilles-entretoises de structure 101 réparties suivant la longueur de l'assemblage combustible, entre les grilles d'extrémité 106, sont constituées par des plaquettes en alliage de zirconium entrecroisées et soudées entre elles sur lesquelles sont rapportés des ressorts de maintien des crayons de combustible, généralement en alliage de nickel.

Des bossettes sont également formées sur les plaquettes par découpage et repoussage du métal des plaquettes. A l'intérieur de chacune des cellules de la grille généralement de section carrée, chacun des crayons combustibles 104 vient en appui sur deux jeux de deux bossettes disposés en vis-à-vis d'un ressort rapporté.

Les grilles de structure dont les ressorts exercent une pression modérée contre les crayons de l'assemblage de combustible assurent principalement un maintien des crayons dans des directions transversales, de manière que les crayons constituent un réseau régulier défini par le réseau des cellules des grilles-entretoises. Les ressorts des grilles de structure 101 n'assurent pas le maintien des crayons dans la direction axiale, ce maintien étant assuré uniquement par les grilles d'extrémité.

Les grilles de brassage 105 intercalées entre les grilles de structure 101 disposées dans la partie supérieure de l'assemblage combustible et entre la grille de structure supérieure 101 et la grille d'extrémité supérieure 106 comportent uniquement des butées de limitation du débattement des crayons dans les directions transversales.

Les ressorts rapportés dans les grilles de structure qui n'exercent que des efforts modérés contre les crayons de combustible permettent la mise en place des crayons dans l'ossature de l'assemblage de combustible par glissement longitudinal des crayons. Ces ressorts qui n'exercent que des efforts modérés sur les crayons n'ont qu'une faible résistance à la compression, dans le cas où les crayons sont soumis à des forces extérieures de direction transversale.

En particulier, dans le cas des crayons disposés à l'extérieur du faisceau et maintenus à l'intérieur des cellules périphériques des grilles-entretoises de l'assemblage, des efforts peuvent s'exercer sur ces crayons périphériques, lors de manutentions de l'assemblage de combustible. Dans ce cas, les crayons périphériques sont susceptibles de se déplacer à l'intérieur des cellules en comprimant les ressorts de maintien, si bien que les grilles des assemblages de combustible sont susceptibles de s'accrocher l'une sur l'autre par l'intermédiaire de leur ceinture et que certains éléments constitutifs de l'assemblage de combustible sont susceptibles d'être détériorés.

En particulier, les crayons maintenus dans les cellules d'angle des grilles-entretoises de l'assemblage peuvent être soumis à des efforts pendant les manutentions d'assemblage de combustible du fait qu'ils se trouvent placés suivant les arêtes longitudinales du faisceau de crayons de combustible.

De manière générale, les crayons reçus à l'intérieur des cellules internes des grilles-entretoises de la structure sont susceptibles de vibrer et de se déplacer, à l'intérieur de l'assemblage de combustible, lorsque celui-ci est parcouru par le fluide de refroidissement du réacteur nucléaire circulant à grande vitesse dans le coeur.

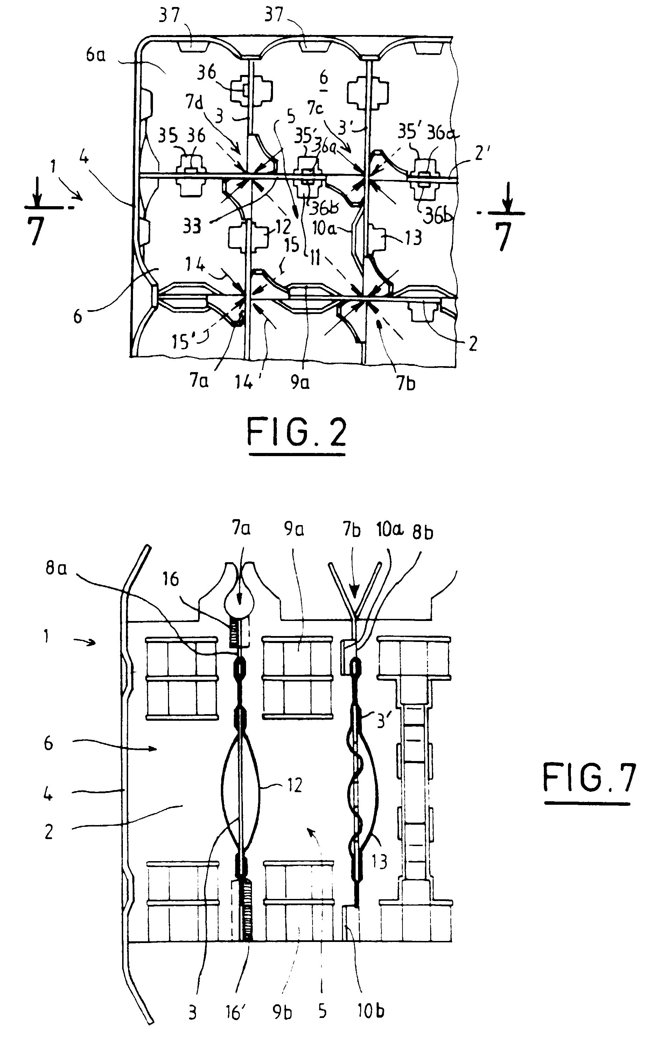

Sur la figure 2, on a représenté dans une vue en plan, une partie d'une grille-entretoise de structure 1 suivant l'invention, au voisinage d'un angle de la grille de forme générale carrée.

La grille-entretoise de structure 1 suivant l'invention est constituée par des plaquettes en alliage de zirconium 2, 2', 3, 3' entrecroisées et fixées l'une sur l'autre par soudage, suivant une arête commune à quatre cellules de la grille.

La grille-entretoise 1 est constituée par des plaquettes métalliques entrecroisées 2, 2', 3, 3' disposées suivant deux directions à 90° l'une de l'autre, de manière à délimiter un réseau de cellules à mailles carrées.

La partie de la grille-entretoise représentée sur la figure 2 et située au voisinage d'un angle de la grille-entretoise comporte une plaquette externe 4 constituant une partie de la ceinture externe de la grille-entretoise 1 qui présente une section carrée. La ceinture externe 4 de la grille délimite avec les plaquettes internes 2, 2', 3, 3' de la grille disposées de manière entrecroisée, des cellules périphériques 6 comportant chacune une paroi constituée par une partie de la ceinture externe.

La cellule d'angle 6a représentée sur la figure 2 est délimitée sur deux de ses faces par la ceinture externe 4.

Chacune des cellules telles que 6 ou 6a de la grille-entretoise est destinée à recevoir un crayon de combustible dont le diamètre est sensiblement inférieur au côté d'une cellule ou un tube-guide dont le diamètre est légèrement inférieur au côté d'une cellule de la grille-entretoise.

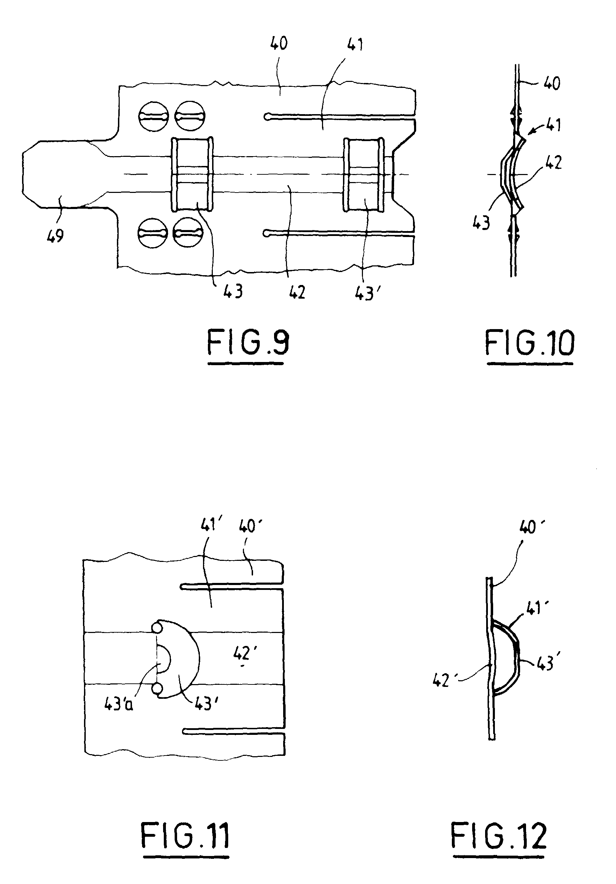

A l'intérieur d'une cellule telle que la cellule 5, le maintien d'un crayon de combustible est assuré par quatre bossettes telles que 9a, 9b et 10a, 10b (voir figures 2 et 7) et par deux ressorts tels que 11 et 12, en saillie à l'intérieur de la cellule 5. Le ressort 11 en saillie dans la cellule 5 se trouve en vis-à-vis des bossettes 9a et 9b et le ressort 12 est en vis-à-vis de deux bossettes telles que 10a et 10b.

Les bossettes telles que 9a, 9b et 10a, 10b sont réalisées par découpage et repoussage du métal des plaquettes telles que 2 et 3' et les ressorts tels que 11 et 12 sont rapportés et fixés sur les plaquettes telles que 2' et 3.

Les ressorts 11 et 12 sont des ressorts doubles, c'est-à-dire des ressorts comportant deux parties actives courbes ou plates disposées dans deux cellules adjacentes, telles que les cellules 5 et 6 en ce qui concerne le ressort 12. Chacun des ressorts tels que le ressort 12, comme il est visible sur la figure 7, est constitué par une lame flexible, par exemple en un alliage de nickel tel qu'un Inconel, pliée en forme d'épingle et comportant deux parties courbes en saillie dans les cellules adjacentes telles que 5 et 6, destinées à venir en contact avec un crayon de combustible pour réaliser sa mise en appui contre un jeu de bossettes disposées en vis-à-vis de la partie active du ressort.

Comme il sera expliqué plus loin, les ressorts tels que 11 et 12 sont introduits dans deux ouvertures traversant une plaquette telle que la plaquette 3 ou la plaquette 2', de manière à chevaucher la plaquette sur une partie de sa largeur. Les ressorts sont généralement placés autour de la plaquette et fixés par des points de soudure joignant leurs deux branches, de part et d'autre de la plaquette.

A l'intérieur de certaines cellules, on dispose des ressorts simples, tels que le ressort 13, qui ne comportent qu'une partie active courbe à l'intérieur d'une seule cellule. Les ressorts simples et leur mode de fixation seront décrits par la suite.

Lorsque les crayons de combustible de l'assemblage sont soumis à des efforts externes de direction transversale, les ressorts de maintien de ces crayons sont susceptibles de se déformer par compression, de sorte que le crayon se déplace à l'intérieur de la cellule. En particulier, les crayons de combustible disposés à l'intérieur des cellules périphériques 6 des grilles-entretoises sont susceptibles de subir des efforts externes importants en cas de choc ou d'accrochage pendant la manutention d'un assemblage de combustible. Ces risques sont encore accrus pour les crayons situés dans les cellules d'angle des grilles-entretoises telles que la cellule 6a représentée sur la figure 2.

Un des buts de l'invention est de proposer des moyens de retenue des crayons et en particulier des crayons périphériques et des crayons situés dans les angles de l'assemblage de combustible qui permettent d'éviter une détérioration ou un accrochage de l'assemblage de combustible.

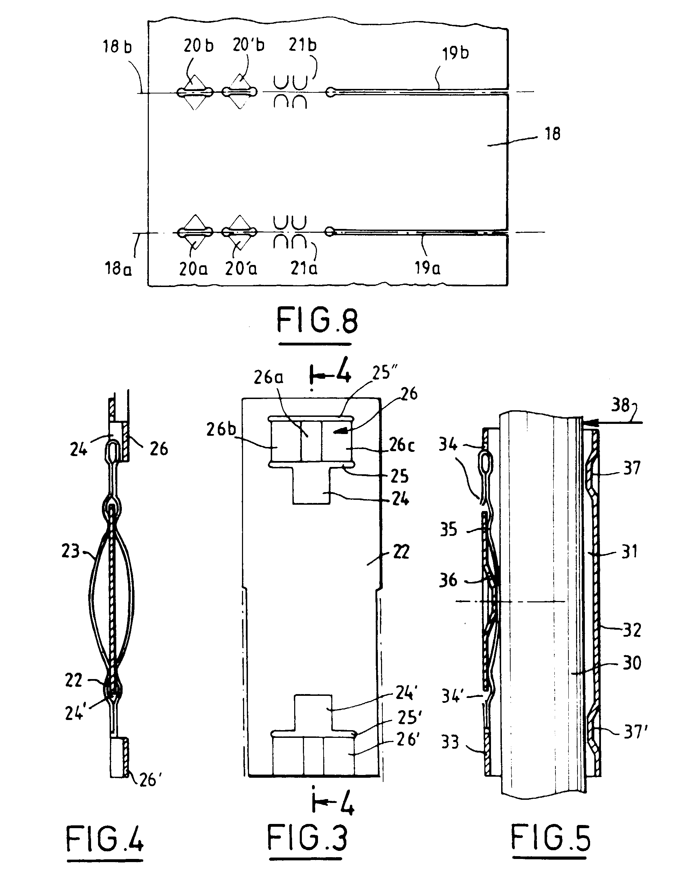

Sur la figure 3, on a représenté une partie d'une plaquette 22 d'une grille-entretoise disposée en vis-à-vis de la ceinture de la grille-entretoise et constituant une paroi d'une cellule périphérique telle que la cellule 6 représentée sur la figure 2.

La plaquette 22 constitue une paroi de la cellule opposée à la ceinture de la grille-entretoise.

Sur la figure 4, on a représenté la paroi 22 de la cellule après montage d'un ressort double 23 assurant le maintien d'un crayon de combustible dans la cellule périphérique de la grille. La plaquette 22 constituant une paroi de la cellule opposée à la ceinture est traversée par deux ouvertures 24 dans la partie supérieure de la plaquette et 24' dans la partie inférieure permettant de réaliser l'introduction et le montage du ressort double 23.

La plaquette 22 est de plus traversée par une fente 25 de direction longitudinale dans le prolongement de l'ouverture 24 et par une fente longitudinale 25' dans le prolongement de l'ouverture 24'. En outre, une seconde fente 25" parallèle à la fente 25 traverse la plaquette 22 dans sa partie supérieure. Comme il est visible sur les figures 3 et 4, on réalise par repoussage du métal de la plaquette 22, entre les fentes 25 et 25", une première butée 26 et par repoussage du métal entre la fente 25' et le bord inférieur de la plaquette 22, une seconde butée 26'.

Le repoussage et le pliage du métal de la plaquette pour constituer les butées sont réalisés de manière que la butée présente une partie centrale telle que 26a sensiblement parallèle au plan de la plaquette 22 et deux parties latérales telles que 26b et 26c inclinées par rapport au plan de la plaquette 22.

Les butées 26 et 26' sont réalisées de la même manière, la partie centrale telle que 26a constituant la partie d'appui de la butée étant à une distance du plan de la plaquette 22 inférieure à la flèche de la partie active courbe du ressort 23.

De cette manière, lors d'un choc ou d'un accrochage d'un assemblage de combustible pendant sa manutention se traduisant par une poussée sur le crayon situé dans la cellule périphérique et maintenu par le ressort 23, le déplacement du crayon et la déformation du ressort sont limités par le fait que le crayon vient en appui sur les butées 26 et 26'. On supprime ainsi les risques d'accrochage des grilles-entretoises des assemblages combustibles.

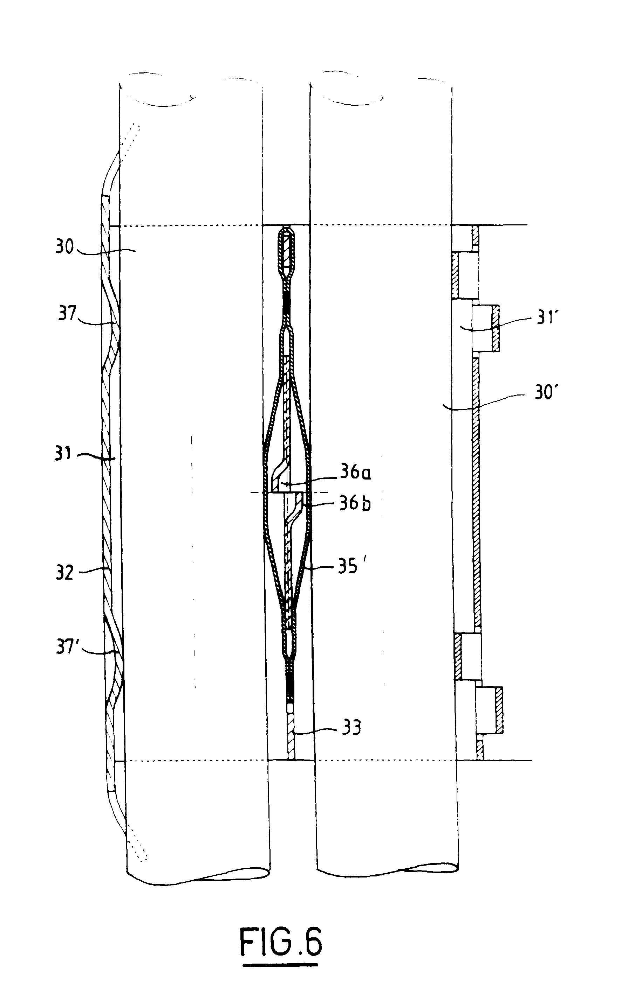

Sur la figure 5, on a représenté une variante de réalisation d'un limiteur de débattement d'un crayon de combustible 30 à l'intérieur d'une cellule périphérique 31 de la grille-entretoise délimitée par une partie de la ceinture 32 de la grille-entretoise et des plaquettes telles que la plaquette 33 constituant la paroi de la cellule 31 disposée en vis-à-vis de la ceinture 32.

La plaquette 33 est traversée par des ouvertures 34 et 34' permettant le montage d'un ressort 35 comportant une partie active courbe venant en saillie à l'intérieur de la cellule 31 sur laquelle s'appuie le crayon de combustible 30.

La plaquette 33 est de plus découpée et repoussée pour constituer une butée 36 ayant une partie d'appui parallèle à la surface de la plaquette 33 dont la distance à la plaquette 33 est inférieure à la flèche de la partie active courbe du ressort 35. Lorsque le ressort 35 est mis en place sur la plaquette 33, la butée 36 se trouve logée à l'intérieur de la concavité de la partie active courbe du ressort 35.

La ceinture 32 comporte, au niveau de la cellule 31, deux bossettes d'appui 37 et 37' qui sont réalisées par repoussage du métal de la ceinture et qui sont situées en vis-à-vis de la partie active du ressort 35.

Lorsqu'il est introduit dans la cellule 31, le crayon de combustible 30 est mis en appui par le ressort 35 contre les butées 37 et 37'.

Dans le cas où une force s'exerce sur le crayon de combustible 30 dans la direction transversale (flèche 38), par exemple lors d'un choc ou d'un accrochage de l'assemblage combustible pendant sa manutention, le crayon de combustible 30 est susceptible de se déplacer dans une direction transversale à l'intérieur de la cellule 31, en direction de la grille-entretoise. La partie active du ressort 35 se trouve comprimée et le crayon de combustible 30 n'est plus en contact avec les bossettes 37 et 37' comme représenté sur la figure 5, ce déplacement transversal du crayon de combustible 30 est limité par la butée 36, la face interne concave de la partie active du ressort 35 venant en contact avec la butée 36 après un certain déplacement du crayon de combustible 30.

Sur la figure 6, on a représenté une variante de réalisation d'un ressort double monté sur une plaquette d'une grille située en vis-à-vis de la ceinture de la grille et de la butée de limitation du fléchissement du ressort usinée dans la plaquette sur laquelle est monté le ressort.

Les éléments correspondants sur les figures 5 et 6 portent les mêmes repères.

La ceinture 32 de la grille comporte des butées d'appui 37 et 37' d'un crayon périphérique 30 qui est maintenu contre les butées 37 et 37', à l'intérieur de la cellule périphérique 31, par l'intermédiaire d'un ressort 35' monté sur la plaquette 33 de la grille disposée en vis-à-vis de la ceinture 32 et constituant une partie d'une paroi de la cellule 31.

A la différence du ressort 35 représenté sur la figure 5 qui comportait des parties convexes venant en appui sur des crayons de combustible, le ressort d'appui 35' représenté sur la figure 6, comporte deux parties planes d'appui venant en contact avec deux crayons 30 et 30' disposés dans les cellules voisines 31 et 31', suivant deux zones d'une certaine longueur disposées suivant une génératrice des crayons 30 et 30'. On augmente ainsi la surface de contact entre le ressort 35' et les crayons 30 et 30', ce qui améliore la transmission des efforts d'appui entre le ressort et les crayons.

On diminue également les contraintes dans les différentes parties du ressort et on limite la corrosion sous contraintes des alliages des ressorts qui sont des alliages à durcissement structural.

On réalise une butée d'appui en deux parties 36a et 36b pour les deux branches du ressort, dans la partie de la plaquette 33 située à l'aplomb des branches du ressort 35'.

Les deux parties 36a et 36b de la butée d'appui du ressort 35' qui ont une hauteur inférieure à la flèche des lames du ressort 35' présentent une forme sensiblement hémisphérique et une surface d'appui aplatie.

Comme il est visible sur la figure 6, les butées en deux parties 36a et 36b sont susceptibles d'assurer la limitation du fléchissement du ressort et du déplacement d'un crayon de combustible, aussi bien dans une cellule périphérique telle que la cellule périphérique 31 que dans une cellule interne telle que la cellule 31'. Bien entendu, il est possible de limiter le fléchissement des ressorts et le déplacement des crayons de combustible, seulement dans les cellules d'angle des grilles-entretoises de structure, dans toutes les cellules périphériques des grilles-entretoises ou encore également dans tout ou partie des cellules internes de la grille-entretoise.

Les moyens pour limiter le débattement des crayons de combustible et le fléchissement des ressorts peuvent être du type représenté sur les figures 3 et 4 ou encore du type représenté sur les figures 5 et 6.

Sur la figure 2, on a représenté de manière très schématique des moyens de limitation du débattement des crayons combustibles, sous la forme de bossettes 36, 36a ou 36b disposées à l'aplomb des ressorts, dans des cellules périphériques telles que les cellules 6 de la grille-entretoise 1 représentée sur la figure ou encore une cellule interne telle que la cellule 5 ou enfin une cellule d'angle telle que la cellule 6a.

Dans le cas où l'on utilise des moyens anti-débattement à l'intérieur d'une cellule telle que la cellule d'angle 6a, ces moyens anti-débattement 36 constitués, par exemple par des bossettes placées à l'aplomb des ressorts, doivent être prévus pour chacun des ressorts 35 en saillie dans la cellule d'angle 6a disposés sur une paroi de la cellule faisant face à la ceinture 4 délimitant la cellule 6a sur deux côtés consécutifs.

De manière générale, on peut prévoir des moyens anti-débattement uniquement dans les cellules d'angle de la grille-entretoise, dans toutes les cellules périphériques ou encore dans tout ou partie des cellules internes de la grille.

Dans le cas où l'on utilise un ressort comportant des parties plates d'appui sur les crayons combustibles tel que le ressort 35' représenté sur la figure 6, on limite dans ce cas les contraintes dans les zones du ressort qui sont sollicitées dans le cas où des efforts s'exercent sur le crayon combustible en appui sur le ressort ainsi que les contraintes de tension à l'intérieur du ressort.

Comme il est visible sur les figures 2 et 7, les plaquettes telles que 2, 2' et 3, 3' sont assemblées entre elles à angle droit. La cellule telle que 5 de forme parallélépipédique à base carrée comporte quatre arêtes parallèles entre elles suivant lesquelles les plaquettes 2, 2' et 3, 3' sont assemblées pour constituer quatre croisillons 7a, 7b, 7c et 7d.

Le croisillon 7a est constitué par les plaquettes 2 et 3 assemblées entre elles suivant une première arête longitudinale 8a de la cellule 5 et les plaquettes 2' et 3' sont assemblées suivant l'arête 8b pour constituer le croisillon 7b.

Les plaquettes telles que la plaquette 2 comportent, suivant les arêtes d'assemblage 8a et 8b, et sur la moitié de leur largeur, une fente d'assemblage destinée à recevoir la plaquette correspondante 3 ou 3' qui comporte elle-même une fente d'assemblage sur la moitié de sa longueur, de manière à réaliser l'encastrement des plaquettes telles que 2, 2', 3 et 3' pour leur assemblage à angle droit.

Comme il sera expliqué plus loin, la fixation des plaquettes est assurée par soudage le long d'une ligne de jonction disposée suivant une arête telle que 8a et 8b.

Les plaquettes sont également fixées par soudage à chacune de leurs extrémités sur une plaque externe de la ceinture 4 de la grille-entretoise représentée sur les figures 2 et 3.

Pour réaliser l'assemblage de la grille-entretoise, les plaquettes telles que 2, 2', 3, 3' sont assemblées entre elles par encastrement au niveau de leurs fentes d'assemblage correspondantes et la ceinture 4 de la grille-entretoise est mise en place autour de la grille-entretoise pré-assemblée.

On réalise un soudage préalable par points des croisillons sur le dessus de la grille pour assurer la liaison entre les plaquettes avant soudage.

On réalise le soudage des plaquettes telles que 2, 2' et 3, 3' entre elles le long des arêtes telles que 8a et 8b et le soudage des extrémités des plaquettes sur la ceinture 4. Les plaquettes et la ceinture sont assemblées entre elles préalablement au soudage par des moyens d'assemblage de type tenons et mortaises.

Le soudage des plaquettes entre elles suivant les arêtes des croisillons et le soudage des extrémités des plaquettes sur la ceinture peuvent être realisés par une torche de soudage au laser ou par faisceau d'électrons.

Le soudage, pour chacun des croisillons, est réalisé dans les plans bissecteurs des quatre dièdres du croisillon.

On va décrire le soudage du croisillon 7a constitué par les plaquettes 2 et 3 assemblées à angle droit.

Le soudage est effectué suivant l'arête 8a et réalisé dans un premier temps au voisinage de la face supérieure de la grille-entretoise 1 et dans un premier plan diamétral de deux dièdres du croisillon 7a, comme indiqué par les flèches 14 et 14' donnant la direction des rayons laser pendant la réalisation du soudage.

On réalise ainsi, de part et d'autre de l'arête 8a, dans le premier plan diamétral des deux dièdres extérieurs à la cellule 5, une première ligne de soudage 16 visible sur la figure 7, suivant une partie de la longueur de l'arête 8a, dans la partie d'extrémité de l'arête, au voisinage de la face supérieure de la grille-entretoise 1.

La ligne de soudure 16 peut s'étendre sur une longueur plus ou moins importante de l'arête 8a, à partir de la face supérieure de la grille-entretoise.

On réalise également la soudure des plaques 2 et 3, suivant l'arête 8a, dans un second plan diamétral commun aux deux dièdres du croisillon 7a comportant le dièdre intérieur de la cellule 5, comme représenté par les flèches en pointillés 15 et 15' sur la figure 2. La soudure dans le second plan diamétral représenté par les directions 15 et 15' des rayons laser de soudage est réalisée suivant l'arête 8a, au voisinage de la partie inférieure de la grille-entretoise 1. On réalise ainsi une ligne de soudage 16' (visible sur la figure 7) s'étendant depuis la face inférieure de la grille-entretoise suivant l'arête 8a, sur une certaine longueur.

Le soudage alterné haut et bas dans les plans diamétraux des deux dièdres opposés du croisillon tel que 7a permet de limiter l'échauffement et la déformation des plaquettes tout en réalisant une fixation résistante et rigide des plaquettes assurant une forme géométrique très précise des cellules.

En outre, dans une cellule telle que la cellule 5, le soudage des croisillons successifs 7a, 7b, 7c et 7d est réalisé de manière que, dans chacune des parties haute et basse des arêtes de jonction des croisillons voisins, les soudures soient effectuées suivant des plans bissecteurs perpendiculaires entre eux.

C'est ainsi que les croisillons 7b et 7d voisins du croisillon 7a sont soudés, dans la partie haute de la grille-entretoise, suivant deux plans bissecteurs de deux dièdres extérieurs à la cellule 5 perpendiculaires au plan suivant lequel est réalisée la soudure 16, ce plan étant défini par les directions 14 et 14' sur la figure 2. Les directions du soudage au niveau de la partie supérieure de la grille sont représentées en traits pleins.

De même, la partie basse des lignes de soudure des croisillons 7b et 7d voisins du croisillon 7a est réalisée suivant la direction d'un plan bissecteur perpendiculaire au plan bissecteur suivant lequel est réalisée la ligne de soudage de la partie basse du croisillon 7a. Les lignes de soudure de la partie basse de la grille sont représentées en pointillés.

De manière générale, sur la figure 2, les directions définissant les plans bissecteurs dans lesquels est réalisé le soudage à la partie supérieure de la grille-entretoise, telles que les directions 14 et 14', sont représentées en traits pleins alors que les directions définissant les plans bissecteurs suivant lesquels est réalisé le soudage à la partie inférieure de la grille-entretoise, telles que les directions 15 et 15', sont représentées en pointillés.

On voit ainsi sur la figure 2, la disposition et la répartition des plans bissecteurs dans lesquels est réalisé le soudage à la partie supérieure et à la partie inférieure de la grille-entretoise.

On obtient ainsi un soudage et une répartition des contraintes thermiques parfaitement symétriques sur chacune des plaquettes constituant la grille, de sorte que les déformations de la grille-entretoise dues au soudage sont minimales.

Bien entendu, on peut réaliser dans un premier temps l'ensemble des soudures supérieures de la grille-entretoise dans les plans bissecteurs ayant des positions alternées pour les croisillons voisins de la grille, puis dans un deuxième temps, l'ensemble des lignes de soudure voisines de la face inférieure de la plaque-entretoise. La désignation des deux faces de la plaque-entretoise par face supérieure et face inférieure n'est donnée que pour la commodité de la description, la plaque-entretoise pouvant être retournée pour être déplacée en-dessous de la tête de soudage, entre deux opérations de soudage.

Sur la figure 8, on voit une plaquette d'une grille-entretoise suivant l'invention désignée par le repère 18 et comportant, suivant deux lignes transversales 18a et 18b suivant lesquelles les plaquettes sont assemblées à angle droit, deux fentes d'assemblage 19a et 19b traversant la plaquette sur toute son épaisseur et s'étendant approximativement sur la moitié de la largeur de la plaquette entre l'un des bords de la plaquette et la partie médiane de celle-ci.

Suivant les arêtes 18a et 18b, dans le prolongement des fentes 19a et 19b sont placés deux moyens de maintien et de fixation 20a, 20'a et 20b, 20'b qui sont utilisés pour assurer la fixation provisoire de deux plaquettes perpendiculaires à la plaquette 18 suivant les lignes d'arêtes 18a et 18b, avant l'opération de soudage, ainsi que le renforcement de la liaison des plaquettes fixées par soudage sur la plaquette 18, le long des lignes d'arêtes 18a et 18b.

Les moyens de fixations 20a, 20'a et 20b, 20'b sont réalisés sous la forme de crevés qui peuvent être repoussés de part et d'autre de deux lumières traversant la plaquette, de manière à venir en saillie par rapport à chacune des faces de la plaquette.

Lors du pré-assemblage, les deux plaquettes qui sont assemblées à la plaquette 18 le long des lignes 18a et 18b viennent s'engager entre les parties en saillie des moyens de fixation 20a, 20'a, 20b, 20'b, ce qui assure leur maintien. Les crevés 20, 20'a, 20b, 20'b sont susceptibles non seulement de participer au maintien provisoire des plaquettes de la grille avant soudage mais encore de reprendre les efforts transversaux sur les plaquettes, lorsque la grille est en service, ce qui diminue d'autant les contraintes exercées sur les soudures.

Afin de rigidifier encore plus les croisillons et d'accroître la résistance à l'écrasement de la grille-entretoise, on prévoit, suivant chacune des arêtes d'assemblage 18a et 18b, entre la fente d'assemblage correspondante 19a ou 19b et l'ensemble de fixation 20a, 20'a ou 20b, 20'b, deux ensembles de languettes 21a et 21b comportant chacun quatre languettes découpées dans l'épaisseur de la plaquette disposées deux à deux en vis-à-vis de part et d'autre des arêtes d'assemblage 18a et 18b et repoussées de manière à venir en saillie de part et d'autre des faces de la plaquette 18.

Bien entendu, on peut prévoir suivant la place disponible sur la plaquette une seule paire de languettes dans des dispositions opposées de part et d'autre de l'arête 18a ou 18b en plus de deux paires de crevés.

Sur les figures 9 et 10, on a représenté une portion d'une plaquette 40 d'une grille-entretoise suivant l'invention, dans une zone 41 constituant une paroi d'une cellule destinée à recevoir un tube-guide de l'assemblage de combustible.

Dans la zone 41, le métal de la plaquette 40 est repoussé de manière à venir légèrement en saillie du côté de la cellule devant recevoir le tube-guide. La partie repoussée de la paroi est mise en forme pour constituer une surface cylindrique concave 42 destinée à recevoir le tube-guide.

La surface cylindrique 42 peut présenter un diamètre important pratiquement égal au côté de la cellule dans laquelle on vient loger le tube-guide. De cette manière, il est possible de placer dans la cellule de la grille-entretoise un tube-guide ayant un diamètre plus grand. L'utilisation de tubes-guides de plus grand diamètre permet d'obtenir une ossature d'assemblage combustible extrêmement rigide et résistante.

De plus, on réalise un découpage et un repoussage de la plaquette 40, dans la zone dans laquelle on a réalisé la surface cylindrique 42, pour constituer deux bossettes 43 et 43' d'une largeur inférieure à la largeur de la surface cylindrique 42 de réception du tube-guide venant en saillie à l'intérieur d'une cellule voisine de la cellule recevant le tube-guide. Les bossettes 43 et 43' constituent des butées d'appui d'un crayon de combustible logé dans la cellule voisine de la cellule recevant le tube-guide.

Sur les figures 11 et 12, on a représenté une variante de réalisation d'une paroi 40' d'une grille-entretoise suivant l'invention dans une zone 41' dans laquelle la plaquette 40' constitue une paroi de séparation entre une cellule destinées à recevoir un tube-guide de grand diamètre et une cellule voisine destinée à recevoir un crayon de combustible.

La paroi 40' est repoussée en direction de la cellule destinée à recevoir un crayon de combustible, pour constituer une surface cylindrique concave 42' dont le diamètre peut être légèrement supérieur au côté de la cellule de la grille-entretoise destinée à recevoir un tube-guide.

De plus, la plaquette 40' est repoussée en direction de la cellule destinée à recevoir le crayon de combustible, de manière à constituer une bossette 43' en forme de demi-calotte sphérique comportant une partie centrale aplatie 43'a destinée à venir en contact avec un crayon de combustible.

Le mode de réalisation représenté sur les figures 11 et 12 permet à la fois de loger un tube-guide de grand diamètre dans une cellule de la grille-entretoise et d'obtenir des bossettes telles que 43' ayant une forte rigidité.

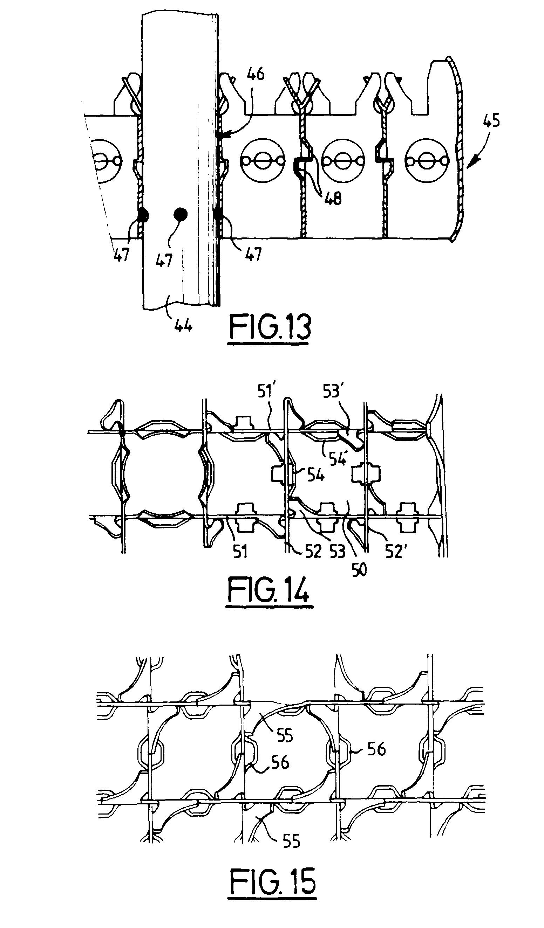

Sur la figure 13, on a représenté un tube-guide 44 qui est introduit dans une cellule d'une grille-entretoise 45 suivant l'invention, comportant des moyens de réception du tube-guide sous la forme de surfaces cylindriques telles que la surface 42' représentée sur les figures 11 et 12.

Les quatre parois délimitant la cellule 46 dans laquelle est disposé le tube 44 comportent chacune une surface de réception cylindrique. Les quatre surfaces de réception du tube-guide 44 comportent un axe commun qui est l'axe de la cellule 46 suivant lequel vient se placer l'axe du tube-guide 44.

La fixation du tube-guide 44 est assurée par des points de soudure 47 effectués à travers la paroi des plaquettes délimitant la cellule 46, dans la zone de ces plaquettes comportant la surface de réception du tube-guide 44.

Les cellules voisines de la cellule 46 comportent des bossettes 48 en forme de demi-calottes sphériques réalisées par repoussage et venant en saillie à l'intérieur de la cellule et d'une cellule voisine qui reçoit également un crayon de combustible.

On obtient ainsi une structure de support d'un assemblage de combustible extrêmement rigide et résistante.

La fixation par soudure des tubes-guides peut être également réalisée sur une languette en saillie à l'extrémité supérieure ou inférieure d'une plaquette telle que la languette 49 représentée sur la figure 9.

Les plaquettes et la ceinture constituant la structure de la grille-entretoise comportent, suivant leurs bords correspondant à la face supérieure de la grille-entretoise en place dans un assemblage de combustible, des ailettes de mélange du fluide de refroidissement venant en contact avec les crayons de combustible de l'assemblage.

Sur les figures 14 et 15 respectivement, on a représenté la face supérieure d'une grille-entretoise suivant l'art antérieur et d'une grille-entretoise suivant l'invention. Les ailettes de mélange et les bossettes d'appui de crayons combustibles dans les cellules de la grille-entretoise ont été modifiées dans le cas de l'assemblage suivant l'invention.

Sur la figure 14, on a représenté plusieurs cellules voisines d'une grille-entretoise, l'une de ces cellules étant destinée à recevoir un tube-guide et les autres cellules des crayons de combustible.

La cellule 50 destinée à recevoir un crayon de combustible est délimitée par quatre plaquettes 51, 51', 52 et 52' entrecroisées, parallèles deux à deux et assemblées pour constituer des croisillons à angle droit.

Chacune des plaquettes 51, 51', 52 et 52' comporte sur son bord supérieur, dans une partie constituant une paroi de la cellule 50, une ailette de guidage et de mélange du fluide de refroidissement.

Une ailette 53 solidaire du bord supérieur de la plaquette 51 ainsi qu'une ailette 53' solidaire du bord supérieur de la plaquette 51' sont repliées vers l'intérieur de la cellule 50 pour assurer le guidage du fluide de refroidissement à la sortie de la cellule 50.

Les bossettes d'appui d'un crayon de combustible en saillie à l'intérieur de la cellule 50 sont réalisées par découpage et repoussage des plaquettes 52 et 51', dans leur partie constituant des parois de la cellule 50. Deux bossettes telles que 54 sont formées sur la plaquette 52 et deux autres bossettes telles que 54' sont formées sur la partie de la plaquette 51' constituant la paroi de la cellule 50.

Des ressorts sont disposés en vis-à-vis des ensembles de bossettes 54 et 54', sur les plaquettes 52' et 51.

Lors du montage de la grille-entretoise par assemblage des plaquettes telles que 51, 51', 52 et 52', il est nécessaire d'engager des fentes correspondantes des plaquettes l'une dans l'autre et de faire glisser les plaquettes l'une par rapport à l'autre jusqu'à l'engagement complet des plaquettes pour réaliser un croisillon.

Il est nécessaire de réaliser les ailettes de guidage et les bossettes de manière à pouvoir réaliser l'assemblage des plaquettes par glissement l'une sur l'autre.

Par exemple, du fait que l'ailette 53 sur le bord supérieur de la plaquette 51 est dirigée vers la butée 54 formée sur la plaquette 52, il est nécessaire de prévoir une ailette 53 suffisamment courte de manière qu'elle n'empiète pas sur la section transversale de la butée 54, afin de permettre l'assemblage des deux plaquettes.

Les ailettes telles que 53 formées sur une plaquette doivent donc être suffisamment courtes, de manière à ne pas déborder sur l'espace occupé par les bossettes d'appui de la plaquette située de manière adjacente à angle droit.

Sur la figure 15, on a représenté des ailettes et des bossettes d'une grille-entretoise suivant l'invention.

Dans le cas d'une grille-entretoise suivant l'invention, les ailettes 55 ont une taille largement supérieure aux ailettes 53 et 53' du mode de réalisation suivant l'art antérieur représenté sur la figure 13 et les bossettes 56 ont une taille réduite, de manière à éviter une interférence des ailettes et des bossettes lors du montage de la grille-entretoise.

Dans le mode de réalisation représenté sur la figure 15, on peut utiliser des bossettes 56 ayant la forme de portions de calottes sphériques et comportant une surface d'appui sensiblement plane en saillie à l'intérieur d'une cellule de la grille-entretoise.

La ceinture des grilles-entretoises comporte également des ailettes de mélange solidaires de son bord supérieur.

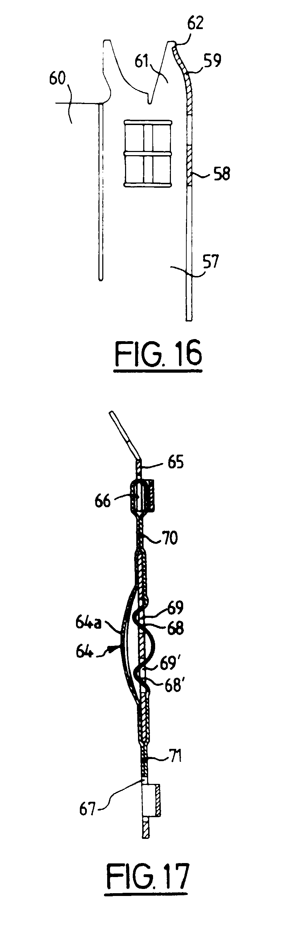

Sur la figure 16, on a représenté une cellule périphérique 57 d'une grille-entretoise dont l'une des parois est constituée par une partie de la ceinture 58 de la grille-entretoise.

La ceinture 58 de la grille-entretoise comporte, suivant son bord supérieur, une ailette de guidage 59 qui est repliée vers l'intérieur de la cellule 57.

La ceinture 58 est assemblée par soudage à une plaquette 60 constituant une paroi latérale de la cellule 57 disposée de manière adjacente et à angle droit par rapport à la partie de la ceinture 58 constituant la paroi externe de la cellule 57.

La plaquette 60 comporte suivant son bord supérieur, une partie en saillie 61 le long de laquelle vient se rabattre l'ailette de guidage 59 de la ceinture 58, au niveau de la cellule 57.

De manière à rigidifier et à consolider les ailettes de guidage telles que 59, on peut assurer une liaison par soudage entre l'ailette de guidage 59 et la partie en saillie 61. Cette liaison par soudage peut être effectuée sous la forme d'un point de soudure 62 reliant l'extrémité de l'ailette 59 et la partie en saillie adjacente 61. Cette liaison par soudage pourrait être effectuée également suivant les bords en contact de l'ailette 59 repliée vers l'intérieur et de la partie en saillie adjacente 61.

Les grilles-entretoises connues de l'art antérieur et qui sont munies de ressorts rapportés comportent généralement un grand nombre de ressorts doubles, c'est-à-dire de ressorts comportant deux parties actives situées dans deux cellules adjacentes, de part et d'autre de la paroi sur laquelle est fixé le ressort. L'utilisation de ressorts doubles présente l'inconvénient que la déformation d'une partie active du ressort entraîne une déformation induite de la seconde partie active du ressort.

En outre, l'utilisation de ressorts doubles ne permet pas toujours d'obtenir un réseau parfaitement régulier des crayons combustibles et donc des espaces de passage d'eau autour des crayons de sections parfaitement identiques.

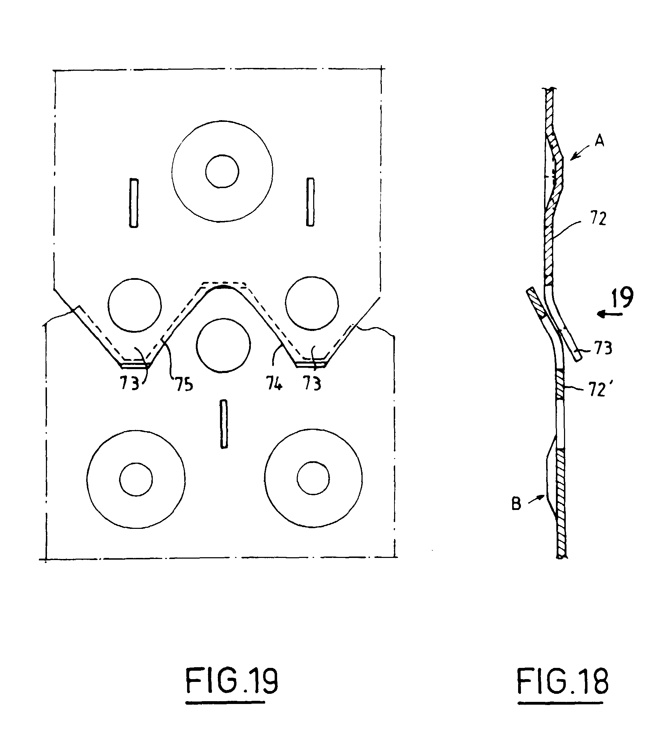

Pour éviter ces inconvénients, la grille-entretoise suivant l'invention peut, dans certains cas, comporter uniquement des ressorts simples dont le montage et la fixation sur les plaquettes de la grille sont réalisés comme représenté sur la figure 17.

La plaquette 65 de la grille sur laquelle est monté le ressort simple 64 comporte deux ouvertures traversantes 66 et 67 dans lesquelles est engagé et fixé le ressort simple 64.

Le ressort 64 est réalisé sous la forme d'un cavalier comportant deux branches dont l'une comporte la partie active courbe ou aplatie du ressort 64a et l'autre deux bossages 68 et 68' de positionnement du ressort à l'intérieur de fenêtres respectives 69 et 69' traversant la plaquette 65.

L'ouverture 66 de la plaquette 65 permet d'assurer le logement de la partie supérieure du ressort 64 comportant la partie pliée de l'épingle et, pour chacune des branches, une partie plane supérieure. Les deux parties planes supérieures des branches du ressort 64 sont fixées l'une sur l'autre par un point de soudure 70, après engagement du ressort 64 sur la plaquette 65.

Le ressort 64 comporte également sur chacune de ses branches, deux parties planes inférieures qui sont fixées l'une à l'autre par un point de soudure 71, à l'intérieur de l'ouverture inférieure 67.

Le ressort simple peut comporter une branche active plate au lieu de la branche courbe convexe 64a.

Sur les figures 18 et 19, on a représenté une partie d'une ceinture 72 d'un premier assemblage de combustible A comportant le bord inférieur de la ceinture et une partie d'une ceinture 72' d'un second assemblage de combustible B comportant le bord supérieur de la ceinture. Les ceintures du premier et du second assemblages sont représentées dans une position d'accostage, au cours de la manutention de l'un des deux assemblages de combustible. Dans cette position, la partie inférieure de la ceinture 72 comportant des ailettes de guidage 73 séparées par des échancrures 74 vient en vis-à-vis de la partie supérieure de la ceinture 72' comportant des ailettes de guidage telles que 75 représentées en pointillé sur la figure 18. Dans le cas d'un assemblage suivant l'invention, une ailette quelconque 75 découpée dans le bord supérieur d'une ceinture d'une grille-entretoise présente des dimensions supérieures à celles d'une échancrure 74 entre deux ailettes 73 du bord inférieur de la grille-entretoise. De cette manière, lors de l'accostage des ceintures des deux assemblages pendant une manutention, l'ailette 75 vient en appui, par ses bords, sur deux ailettes voisines 73 de la ceinture d'une grille-entretoise. On évite ainsi tout risque d'accrochage entre les grilles-entretoises des assemblages de combustible.

Dans le cas d'assemblages suivant l'art antérieur, les ailettes et les échancrures présentent des dimensions sensiblement identiques, de sorte que les ailettes peuvent venir s'engager dans les échancrures pendant la manutention d'assemblages de combustible, ce qui produit des accrochages.

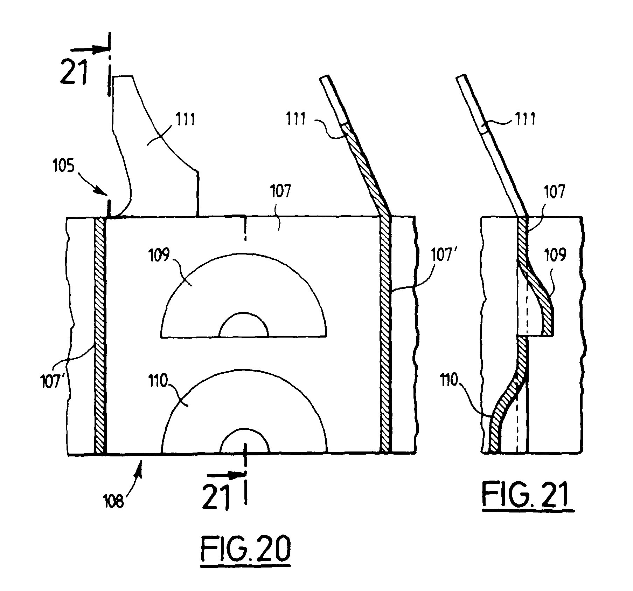

Sur les figures 20 et 21, on a représenté une cellule d'une grille additionnelle de mélange intercalée entre deux grilles de structure, telle que la grille 105 représentée sur la figure 1.

Les figures 20 et 21 correspondent aux figures 3 et 4 du EP-A-0.468.871, la grille 105 étant réalisée selon les enseignements de ce brevet européen.

Dans le cadre de la présente invention, les grilles telles que les grilles 105 comportant des moyens de mélange du réfrigérant seront utilisées comme grilles additionnelles de mélange.

La grille additionnelle 105 est constituée par deux jeux de plaquettes entrecroisées disposés à angle droit 107, 107' pour constituer des cellules telles que la cellule 108 destinée à recevoir un crayon de combustible. Les bords supérieurs des plaquettes sont découpés de manière à constituer des ailettes de mélange 111 destinées à créer des turbulences et des écoulements transversaux, sur la circulation du fluide réfrigérant du réacteur nucléaire. Les ailettes de mélange 111 s'étendent chacune au niveau d'une seule cellule et sont pliées chacune vers l'intérieur d'une cellule.

Les cellules internes de la grille destinées à recevoir un crayon de combustible et voisines de cellules recevant également un crayon de combustible telles que la cellule 108 comportent sur leur quatre faces des moyens de butée en saillie vers l'intérieur de la cellule délimitant un passage de dimension supérieure à la dimension d'un crayon. Les moyens de butée sont constitués, sur chaque face (telle que la plaquette 107), séparant deux cellules telles que 108 recevant chacune un crayon de combustible, par deux portions 109 et 110 en forme d'écopes découpées et embouties ; les deux portions 109 et 110 ont une face convexe en forme de demi-bouton dont la base est approximativement semi-circulaire et sont alignées l'une par rapport à l'autre, dans la direction de circulation du réfrigérant du réacteur. Les portions de paroi 109 et 110 en forme d'écope permettent à la fois de limiter le débattement des crayons pour éviter un contact des crayons avec les ailettes de mélange et de faire passer le fluide réfrigérant d'une cellule à une cellule voisine.

Lorsque les crayons de combustible sont maintenus à l'intérieur des cellules des grilles de mélange 105 par des bossettes en forme de calotte sphérique ou telles que représentées sur les figures 20 et 21, il est nécessaire de prévoir un léger jeu radial entre les crayons de combustible et les bossettes de maintien, pour pouvoir engager les crayons de combustible dans les grilles lors du montage ou du rechargement de l'assemblage. De ce fait, les crayons sont susceptibles de vibrer à l'intérieur des cellules des grilles de mélange, dans le réacteur en fonctionnement.

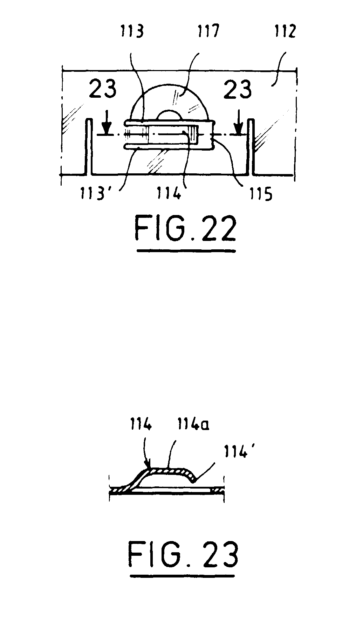

Comme représenté sur les figures 22 et 23, les parois 112 des cellules des grilles de mélange 105 de l'assemblage situées en vis-à-vis de parois comportant des bossettes rigides, peuvent comporter avantageusement des bossettes élastiques 114 réalisées par découpage de la paroi 112 pour réaliser deux fentes 113 et 113' parallèles entre elles et par repoussage du métal de la paroi entre les deux fentes 113 et 113' pour réaliser une partie en saillie ayant la forme d'un pont.

Du fait de la largeur réduite de la zone de la paroi 112 située entre les fentes 113 et 113', la bossette "pont" présente une bonne élasticité. On prévoit généralement deux bossettes "ponts" élastiques sur la paroi 112 de la cellule, l'une au voisinage de la partie supérieure et l'autre au voisinage de la partie inférieure de la grille, en vis-à-vis de deux bossettes rigides situées sur une paroi opposée de la cellule. On prévoit un espace entre les bossettes "ponts" et les bossettes rigides légèrement inférieur au diamètre d'un crayon de combustible, si bien qu'un crayon de combustible introduit dans une cellule de la grille de mélange qui est rappelé par les bossettes "ponts" contre les bossettes rigides, se trouve immobilisé et n'est donc pas soumis aux vibrations du fait du passage du fluide de refroidissement. On pallie ainsi l'absence des ressorts de maintien sur les grilles de mélange.

Comme représenté sur les figures 22 et 23, la bossette "pont" peut comporter une découpe 115, si bien que l'extrémité 114' de la bossette est détachée de la paroi 112 dans laquelle elle est découpée.

On accroît ainsi l'élasticité de la bossette "pont" 114. La partie centrale 114a de la bossette "pont" 114 peut être avantageusement aplatie de manière à venir en contact avec le crayon de combustible dans une zone de plus grande surface.

La paroi 112 est également repoussée au-dessus (ou en-dessous) de la bossette élastique 114, du côté opposé à la bossette 114, pour constituer une bossette rigide 117 dans une cellule voisine de la cellule dans laquelle la bossette élastique 114 est en saillie.

Les assemblages de combustible suivant l'invention comportant des grilles-entretoises optimisées ont une durée de vie accrue, avec un taux de combustion élevé, sans risque en ce qui concerne la sécurité du réacteur nucléaire.

En outre, les grilles-entretoises suivant l'invention peuvent être réalisées de manière plus simple avec une qualité de réalisation géométrique et dimensionnelle supérieure.

Les grilles-entretoises suivant l'invention sont également plus résistantes lors des manutentions de l'assemblage combustible.

L'invention ne se limite pas aux modes de réalisation qui ont été décrits.

C'est ainsi que les plaquettes de la grille-entretoise réalisées par découpage et repoussage peuvent présenter une forme différente de celles qui ont été décrites. Les ressorts rapportés peuvent également être différents des formes décrites et représentées.

Le soudage des plaquettes de la grille-entretoise peut être réalisé, dans des zones d'extrémité des arêtes des croisillons d'une longueur plus ou moins importante.

Les assemblages de combustible suivant l'invention comportant des grilles de plusieurs types peuvent comporter uniquement des grilles de maintien et des grilles de structure, à l'exclusion de grilles de mélange.

L'invention s'applique aussi bien aux assemblages de combustible comportant uniquement des grilles-entretoises de structure suivant l'invention qu'aux assemblages combustibles comportant des grilles-entretoises de structure suivant l'invention et des grilles d'un autre type, par exemple des grilles de brassage additionnelles et des grilles de maintien des crayons de combustible.

Enfin, l'invention s'applique non seulement dans le cas d'assemblages combustibles ayant des grilles définissant un réseau à mailles carrées avec un nombre quelconque de cellules mais également dans le cas d'assemblages de combustible ayant des grilles définissant un réseau d'une autre forme.

## Revendications

1. Grille-entretoise d'un assemblage de combustible pour un réacteur nucléaire constituée par des plaquettes métalliques entrecroisées (2, 2', 3, 3') délimitant un réseau régulier de cellules (5, 6, 6a) de forme prismatique dont une partie comporte, dans chaque cellule, au moins un ressort de maintien (12, 13, 23, 35, 35') d'un crayon de combustible (30, 30') destiné à être logé dans la cellule, le ressort étant disposé sur une paroi de la cellule constituée par une partie d'une plaquette métallique et ayant une partie active en saillie vers l'intérieur de la cellule par rapport à la paroi, caractérisée par le fait que, pour une partie au moins des cellules de la grille-entretoise (1), au moins une paroi plane, sur laquelle est fixé un ressort (23, 35, 35'), comporte au moins une butée (26, 26', 36, 36a, 36b) présentant une partie plane sensiblement parallèle à la paroi de la cellule sur laquelle est fixé le ressort (23, 25, 25'), en saillie à l'intérieur de la cellule, de manière à limiter le débattement d'un crayon de combustible (30, 30') logé dans la cellule.

2. Grille-entretoise suivant la revendication 1, caractérisée par le fait que la butée (26, 26', 36, 36a, 36b) est obtenue par découpage et repoussage de la paroi de la cellule.

3. Grille-entretoise suivant l'une quelconque des revendications 1 et 2, de forme polygonale ayant des cellules d'angle (6a) disposées dans chacun des angles de la grille (1) comportant deux parois successives constituées par des parties disposées angulairement d'une ceinture périphérique (4) de la grille (1) et deux parois en vis-à-vis de la ceinture (4) portant chacune un ressort (35), caractérisée par le fait que chacune des parois placées en vis-à-vis de la ceinture (4) comporte au moins une butée (36) en saillie à l'intérieur de la cellule (6a) et que seules les cellules d'angle (6a) comportent des butées (36) de limitation de débattement d'un crayon de combustible logé dans une cellule d'angle (6a).

4. Grille-entretoise suivant l'une quelconque des revendications 1 et 2, ayant un ensemble de cellules périphériques (6) comportant chacune au moins une paroi externe constituée par une partie d'une ceinture périphérique (4) de la grille (1) et une paroi interne en vis-à-vis de la ceinture (4), caractérisée par le fait que la paroi interne de chacune des cellules périphériques placée en vis-à-vis de la ceinture (4) comporte au moins une butée (26, 36, 36a) en saillie à l'intérieur de la cellule (6) et que, seules les cellules périphériques de la grille-entretoise, comportent des butées (26, 36, 36a) de limitation du débattement des crayons de combustible disposés dans les cellules périphériques (6).

5. Grille-entretoise suivant l'une quelconque des revendications 1 à 4, caractérisée par le fait que la plaquette (22) sur laquelle est disposé le ressort (23) est découpée et repoussée dans deux zones (26, 26') constituant des butées de part et d'autre de chacune des extrémités du ressort (23), les faces d'appui des butées (26, 26') étant à une distance de la face interne de la paroi de la cellule périphérique (31) inférieure à la flèche d'une partie active du ressort (23).

6. Grille-entretoise suivant l'une quelconque des revendications 1 à 4, caractérisée par le fait que la paroi (33) sur laquelle est disposé le ressort (35) est découpée et repoussée pour constituer une butée (36), dans une zone située entre une partie active du ressort (35) et la paroi de la cellule (31) sur laquelle est disposé le ressort (35).

7. Grille-entretoise suivant la revendication 6, caractérisée par le fait que la paroi (33) de la cellule (31. 31') sur laquelle est disposé le ressort (35') est découpée et repoussée pour constituer deux butées (36a, 36b) en forme de demi-calottes sphériques aplaties, en saillie dans deux cellules voisines (31, 31') séparées par la plaquette (33), dans des zones situées chacune entre une partie active du ressort (35') et la paroi (33) des cellules (31, 31').

8. Grille-entretoise suivant l'une quelconque des revendications 1 à 7, caractérisée par le fait que le ressort (35') comporte une zone plane d'appui sur un crayon de combustible (30, 30') dans sa partie active en saillie à l'intérieur de la cellule (31, 31') de la grille.

9. Grille-entretoise suivant l'une quelconque des revendications 1 à 8 comportant un ensemble de cellules destinées à recevoir chacune un tube-guide de l'assemblage combustible, caractérisée par le fait que les cellules des grilles-entretoises destinées à recevoir un tube-guide (44, 102) comportent sur chacune de leurs parois constituées par une partie d'une plaquette (40, 40') une zone repoussée par rapport à la paroi constituée par la plaquette (40, 40'), présentant une surface cylindrique (42, 42') concave dirigée vers l'intérieur de la cellule recevant le tube-guide (44, 102).

10. Grille-entretoise suivant la revendication 9, caractérisée par le fait que la paroi de la cellule constituée par une plaquette (40) est repoussée vers l'intérieur de la cellule recevant le tube-guide pour constituer la surface cylindrique (42) et dans une direction opposée à l'intérieur d'une cellule adjacente à la cellule destinée à recevoir le tube-guide (44, 102) pour constituer une bossette (43) d'appui d'un crayon combustible en vis-à-vis d'une partie de la surface cylindrique (42).

11. Grille-entretoise suivant la revendication 9, caractérisée par le fait que la paroi de la cellule constituée par une partie de la plaquette (40') est repoussée vers l'extérieur de la cellule destinée à recevoir le tube-guide pour constituer la surface cylindrique (42') et comporte une bossette d'appui (43') d'un crayon de combustible en forme de portion de calotte sphérique en saillie à l'intérieur d'une cellule adjacente à la cellule destinée à recevoir un tube-guide.

12. Grille-entretoise suivant l'une quelconque des revendications 9, 10 et 11, caractérisée par le fait que, dans chacune des cellules destinées à recevoir un tube-guide (44), le tube-guide (44) est fixé par des points de soudure sur les plaquettes constituant les parois de la cellule, dans les zones repoussées de forme cylindrique (42, 42') ou sur une partie en saillie (49) de la plaquette à la partie supérieure ou à la partie inférieure de la grille-entretoise.

13. Grille-entretoise suivant l'une quelconque des revendications 1 à 12, dont les plaquettes (51, 52, 51', 52') comportent, au niveau de chacune des cellules (50) de la grille et suivant l'un de leurs bords longitudinaux, une ailette (53, 53') de mélange de fluide de refroidissement de l'assemblage de combustible, rabattue vers l'intérieur de la cellule (50), caractérisée par le fait que les ailettes de mélange (53, 53', 55) rabattues vers l'intérieur de la cellule sont réalisées de manière à ne pas être superposées dans une direction longitudinale de la cellule (50) avec des bossettes d'appui (54, 54', 56) en saillie à l'intérieur de la cellule (50).

14. Grille-entretoise suivant la revendication 13, caractérisée par le fait que les bossettes (56), ont une taille réduite, les ailettes de mélange présentant une taille accrue.

15. Grille-entretoise suivant l'une quelconque des revendications 1 a 14, comportant une ceinture périphérique (4) présentant sur l'un au moins de ses bords des ailettes de guidage (59) de l'assemblage combustible adjacentes à une plaquette (60) de la grille-entretoise, caractérisée par le fait que la plaquette (60) comporte une partie (61) en saillie par rapport à l'un de ses bords adjacents à l'ailette de guidage (59) et que l'ailette de guidage (59) est fixée par soudage à son extrémité sur la partie en saillie (61) de la plaquette (60).

16. Grille-entretoise suivant l'une quelconque des revendications 1 à 15, comportant sur le bord supérieur et sur le bord inférieur de sa ceinture (72, 72'), des ailettes de guidage (73, 75) repliées vers l'intérieur de la grille-entretoise et séparées par des échancrures (74) du bord de la ceinture, caractérisée par le fait que les ailettes de guidage (75) d'un bord de la ceinture (72) ont des dimensions supérieures à celles des échancrures (74) de l'autre bord de la ceinture (72).

17. Grille-entretoise suivant l'une quelconque des revendications 1 à 16, comportant au moins un ressort (64) ayant une partie active (64a) à l'intérieur de chacune des cellules pour assurer le maintien d'un crayon de combustible, caractérisée par le fait que chacun des ressorts (64) de chacune des cellules des grilles-entretoises comporte une seule partie active (64a), en saillie à l'intérieur d'une cellule de la grille-entretoise.

18. Grille-entretoise suivant la revendication 17, caractérisée par le fait que chacun des ressorts (64) est fixé sur une plaquette (65) de la grille-entretoise percée de deux fenêtres (66, 67) pour l'engagement et la fixation par soudage l'une sur l'autre de deux branches du ressort (64) en forme d'épingle, placées de manière à chevaucher une partie de la plaquette (65) et de deux fenêtres (69, 69') pour l'engagement de deux bossages (68, 68') d'une branche du ressort (64) opposée à la branche du ressort comportant la partie active (64a).

19. Grille-entretoise suivant l'une quelconque des revendications 1 à 18, dont les arêtes (8a, 8b) des cellules parallèles entre elles sont constituées chacune par l'intersection de deux plaquettes formant un croisillon (7a, 7b, 7c, 7d) constitué de quatre dièdres ayant en commun une arête commune à quatre cellules, caractérisée par le fait que les plaquettes (2, 2', 3, 3') sont soudées entre elles deux à deux au niveau de chacune des arêtes (8a, 8b) suivant un premier plan bissecteur (14, 14') de deux dièdres opposés, dans une première zone d'extrémité de l'arête (8a, 8b) et suivant un second plan bissecteur (15, 15') des deux autres dièdres opposés, dans une seconde zone d'extrémité de l'arête (8a, 8b) du croisillon opposée à la première.

20. Grille-entretoise suivant la revendication 19, caractérisée par le fait que pour chacune des cellules de la grille-entretoise (1, 101) les plaquettes (2, 2', 3, 3') constituant deux croisillons (7b, 7c) adjacents par rapport à un premier croisillon (7a) sont soudées entre elles suivant un plan parallèle au second plan bissecteur (15, 15') dans une première zone d'extrémité de leur arête (8a, 8b), en vis-à-vis de la première zone d'extrémité de l'arête (8a) du premier croisillon (7a) et suivant un plan parallèle au premier plan bissecteur (14, 14') dans une seconde zone d'extrémité située en vis-à-vis de la seconde zone d'extrémité de l'arête (8a) du premier croisillon (7a).

21. Grille-entretoise suivant l'une quelconque des revendications 19 et 20, caractérisée par le fait que les plaquettes (2, 2', 3, 3') des grilles-entretoises (1, 101) sont soudées entre elles par l'une des techniques : soudage par faisceau laser, soudage par faisceau d'électrons.

22. Grille-entretoise suivant l'une quelconque des revendications 19, 20 et 21, dont les plaquettes comportent, suivant les arêtes (18a, 18b) des croisillons constitués chacun par l'assemblage de deux plaquettes, une fente d'engagement (19a, 19b) sur une longueur correspondant sensiblement à la demi-largeur de la plaquette (18) et des moyens de maintien (20a, 20'a, 20b, 20'b) des plaquettes (18) constituant un croisillon sous la forme de crevés obtenus par découpage et repoussage du métal de la plaquette (18), caractérisée par le fait que chacune des plaquettes comporte de plus, entre la fente d'engagement (19a, 19b) et les moyens de maintien (20a, 20'a, 20b, 20'b), des ensembles (21a, 21b) de languettes découpées et repoussées en dehors des plans des faces de la plaquette (18).

23. Assemblage de combustible pour un réacteur nucléaire comportant une ossature constituée par des tubes-guides (44, 102) parallèles entre eux, des grilles-entretoises (1, 101) réparties suivant la longueur des tubes-guides (44, 102) et des embouts d'extrémité (103) fixés à l'extrémité des tubes-guides (44, 102), caractérisé par le fait qu'une partie au moins des grilles-entretoises de l'assemblage (1, 101) sont des grilles-entretoises suivant l'une quelconque des revendications 1 à 22.

24. Assemblage de combustible suivant la revendication 23, caractérisé par le fait qu'il comporte des grilles d'extrémité (106) pour le maintien axial de crayons combustibles de l'assemblage.

25. Assemblage de combustible suivant l'une quelconque des revendications 23 ou 24, caractérisé par le fait qu'il comporte de plus des grilles additionnelles de mélange (105) intercalées chacune entre deux grilles-entretoises (101) ou une grille-entretoise (101) et une grille d'extrémité (106), de l'assemblage combustible constituant la partie supérieure de l'ossature dans la position de service de l'assemblage de combustible dans le réacteur nucléaire.

26. Assemblage de combustible suivant la revendication 25, caractérisé par le fait que les grilles de mélange additionnelles (105) comprennent au moins deux jeux de plaquettes entrecroisées (107, 107') délimitant des cellules (108) recevant soit un crayon de combustible soit un tube-guide et munies de moyens de butée en saillie vers l'intérieur des cellules destinées à recevoir des crayons de combustible, les moyens de butée comportant sur chaque paroi séparant deux cellules internes occupées par des crayons de combustible, deux portions de plaquettes (109, 110) découpées et déformées en forme d'écopes, décalées dans le sens de circulation du fluide réfrigérant du réacteur à travers l'assemblage de combustible dont les saillies sont de sens opposés et ouvertes d'un seul côté axial pour limiter le débattement des crayons de combustible et tendre à faire passer le fluide réfrigérant d'une cellule à l'autre.

27. Assemblage de combustible suivant l'une quelconque des revendications 25 et 26, caractérisé par le fait que les grilles de mélange additionnelles (105) comportant des parois (112) délimitent des cellules pour des crayons de combustible sur lesquelles sont réalisées par découpage et repoussage du métal de la paroi des bossettes élastiques (114) en forme de ponts disposées en vis-à-vis de bossettes rigides (117) prévues sur des parois opposées des cellules de la grille.

28. Assemblage de combustible suivant la revendication 27, caractérisé par le fait que les bossettes "ponts" élastiques sont détachées de la paroi (112), à l'une de leurs extrémités par une découpe (115).

29. Assemblage de combustible suivant l'une quelconque des revendications 24 à 28, caractérisé par le fait que les grilles d'extrémité de maintien (106) sont entièrement en acier martensitique et comportent des ressorts formés dans le métal de la grille-entretoise de maintien.

30. Assemblage de combustible suivant l'une quelconque des revendications 24 à 29, caractérisé par le fait que la grille d'extrémité supérieure (106) de l'assemblage combustible est montée coulissante sur les tubes-guides (102).

## Patentansprüche

1. Abstandhaltergitter für ein Kernreaktor-Brennstabbündel, bestehend aus gekreuzten Metallplättchen (2, 2', 3, 3'), die ein regelmäßiges Zellennetz (5, 6, 6a) prismatischer Form begrenzen, von dem ein Teil in jeder Zelle zumindest eine Feder (12, 13, 23, 35, 35') zur Halterung eines Brennstabs (30, 30') umfaßt, die dazu bestimmt ist, in der Zelle untergebracht zu werden, wobei die Feder auf einer Wand der Zelle angeordnet ist, die durch einen Teil eines Metallplättchens gebildet ist und einen aktiven Teil zum Innern der Zelle in bezug auf die Wand vorspringend aufweist, dadurch gekennzeichnet, daß zumindest für einen Teil der Zellen des Abstandhaltergitters (1) zumindest eine ebene Wand, auf welcher eine Feder (23, 35, 35') befestigt ist, zumindest einen Anschlag (26, 26', 36, 36a, 36b) aufweist, der einen zumindest im wesentlichen ebenen Teil parallel zu der Wand der Zelle aufweist, auf welcher die Feder (23, 25, 25') zum Innern der Zelle vorspringend befestigt ist, um den Durchfederungsweg eines Brennstabs (30, 30') zu begrenzen, der in der Zelle untergebracht ist.

2. Abstandhaltergitter nach Anspruch 1, dadurch gekennzeichnet, daß der Anschlag (26, 26', 36, 36a, 36b) durch Freischneiden und Heraustreiben der Wand der Zelle gebildet ist.

3. Abstandhaltergitter nach Anspruch 1 oder 2 in mehreckiger Form mit Eckenzellen (6a), die in jeder Ecke des Gitters (1) angeordnet sind und zwei aufeinanderfolgende Wände aufweisen, die durch im Winkel angeordnete Teile einer Umfangseinfassung (4) des Gitters (1) angeordnet sind, und zwei Wände in Gegenüberlage zu der Einfassung (4), die jeweils eine Feder (35) tragen, dadurch gekennzeichnet, daß jede der in Gegenüberlage zu der Einfassung (4) angeordnete Wand zumindest einen Anschlag (36) aufweist, der in das Innere der Zelle (6a) vorspringt, und daß ausschließlich die Eckenzellen (6a) Anschläge (36) zur Begrenzung des Durchfederungswegs eines Brennstabs aufweisen, der in einer Eckenzelle (6a) untergebracht ist.

4. Abstandhaltergitter nach Anspruch 1 oder 2 mit einer Einheit aus außenliegenden Zellen (6), die jeweils zumindest eine Außenwand aufweisen, die durch einen Teil einer Umfangseinfassung (4) des Gitters (1) gebildet ist, und eine Innenwand in Gegenüberlage zu der Einfassung (4), dadurch gekennzeichnet, daß die Innenwand jeder außenliegenden Zelle, angeordnet in Gegenüberlage zu der Einfassung (4) zumindest einen Anschlag (26, 36, 36a) ins Innere der Zelle (6) vorspringend, umfaßt, und daß ausschließlich die außenliegenden Zellen des Abstandhaltergitters Anschläge (26, 36, 36a) zur Begrenzung des Durchfederungswegs der Brennstäbe aufweisen, die in den außenliegenden Zellen (6) angeordnet sind.

5. Abstandhaltergitter nach einem der Ansprüche 1 bis 4, dadurch gekennzeichnet, daß das Plättchen (22), auf welchem die Feder (23) angeordnet ist, in zwei Zonen (26, 26') freigeschnitten und herausgetrieben ist, welche die Anschläge für jedes der Enden der Feder (23) bilden, wobei die Anlageflächen der Anschläge (26, 26') mit einem Abstand zu der Innenseite der Wand der unteren außenliegenden Zelle (31) bei Durchbiegung eines aktiven Teils der Feder (23) liegen.

6. Abstandhaltergitter nach einem der Ansprüche 1 bis 4, dadurch gekennzeichnet, daß die Wand (33), auf welcher die Feder (35) angeordnet ist, freigeschnitten und herausgetrieben ist, um einen Anschlag (36) in einer Zone zu bilden, die zwischen einem aktiven Teil der Feder (35) und der Wand der Zelle (31) angeordnet ist, auf der die Feder (35) angeordnet ist.

7. Abstandhaltergitter nach Anspruch 6, dadurch gekennzeichnet, daß die Wand (33) der Zelle (31, 31'), auf welcher die Feder (35') angeordnet ist, freigeschnitten und herausgetrieben ist, um zwei Anschläge (36a, 36b) in Form abgeflachten halbkugelförmigen Kalotten vorspringend in zwei benachbarte Zellen (31, 31'), die durch das Plättchen (33) getrennt sind, in den Zonen zu bilden, die jeweils zwischen einem aktiven Teil der Feder (35') und der Wand (33) der Zellen (31, 31') angeordnet sind.

8. Abstandhaltergitter nach einem der Ansprüche 1 bis 7, dadurch gekennzeichnet, daß die Feder (35') eine abgeflachte Anlagezone zur Anlage an einem Brennstab (30, 30') in ihrem aktiven Teil vorspringend in das Innere der Zelle (31, 31') des Gitters umfaßt.

9. Abstandhaltergitter nach einem der Ansprüche 1 bis 8, aufweisend eine Einheit von Zellen, die dazu bestimmt sind, jeweils ein Führungsrohr für das Brennstabbündel aufzunehmen, dadurch gekennzeichnet, daß die Zellen der Abstandhaltergitter, die dazu bestimmt sind, ein Führungsrohr (44, 102) aufzunehmen, auf jeder ihrer Wände, die durch einen Teil eines Plättchens (40, 40') gebildet sind, eine Zone aufweisen, die in bezug auf die durch das Plättchen (40, 40') herausgetrieben ist und eine konkave bzw. erhabene zylindrische Oberfläche (42, 42') aufweist, die zum Innern der Zelle gerichtet ist, welche das Führungsrohr (44, 102) aufnimmt.

10. Abstandhaltergitter nach Anspruch 9, dadurch gekennzeichnet, daß die Wand der Zelle, gebildet durch das Plättchen (40) in Richtung auf das Innere der Zelle herausgetrieben ist, welche das Führungsrohr aufnimmt, um eine Zylinderfläche (42) zu bilden, und in eine Richtung in Gegenüberlage zum Innern einer Zelle benachbart zu derjenigen Zelle, die dazu bestimmt ist, das Führungsrohr (44, 102) aufzunehmen, um einen Vorsprung (43) zur Anlage eines Brennstabs in Gegenüberlage zu einem Teil der Zylinderfläche (42) zu bilden.

11. Abstandhaltergitter nach Anspruch 9, dadurch gekennzeichnet, daß die Wand der Zelle, die durch einen Teil des Plättchens (40) gebildet ist, in Richtung auf die Außenseite der Zelle herausgetrieben ist, die dazu bestimmt ist, das Führungsrohr aufzunehmen, um eine Zylinderfläche (42') zu bilden, und einen Vorsprung (43') zur Anlage eines Brennstabs in Form eines Kugelkalottenteils vorspringend zum Innern der Zelle benachbart zu derjenigen Zelle umfaßt, die dazu bestimmt ist, ein Führungsrohr aufzunehmen.

12. Abstandhaltergitter nach einem der Ansprüche 9, 10 und 11, dadurch gekennzeichnet, daß in jeder Zelle, die dazu bestimmt ist, ein Führungsrohr (44) aufzunehmen, das Führungsrohr (44) durch Schweißpunkte auf den Plättchen fixiert ist, die die Wände der Zelle bilden, und zwar in herausgetriebenen Zonen (42, 42') zylindrischer Form, oder auf einem vorspringenden Teil (49) am oberen Teil oder unteren Teil des Abstandhaltergitters.

13. Abstandhaltergitter nach einem der Ansprüche 1 bis 12, dessen Plättchen (51, 52, 51', 52') auf Höhe jeder Zelle (50) des Gitters und entlang einem ihrer Längsränder einen Flügel (53, 53') zur Mischung von Kühlfluid für das Brennstabbündel umfassen, der zum Innern der Zelle (50) umgelegt ist, dadurch gekennzeichnet, daß die zum Innern der Zelle umgelegten Mischflügel (53, 53', 55) derart verwirklicht sind, daß sie in Längsrichtung der Zelle (50) bei zum Innern der Zelle vorspringenden Anlagevorsprüngen (54, 54', 56) nicht übereinander angeordnet werden können.

14. Abstandhaltergitter nach Anspruch 13, dadurch gekennzeichnet, daß die Vorsprünge (56) eine verringerte Größe und die Mischflügel eine vergrößerte Größe aufweisen.

15. Abstandhaltergitter nach einem der Ansprüche 1 bis 14, aufweisend eine Umfangseinfassung (4), die auf zumindest einem ihrer Ränder Führungsflügel (59) für das Brennstabbündel benachbart zu einem Plättchen (60) des Abstandhaltergitters aufweist, dadurch gekennzeichnet, daß das Plättchen (60) einen Teil (61) umfaßt, der in bezug auf einen seiner Ränder benachbart zu dem Führungsflügel (59) vorspringt, und daß der Führungsflügel (59) durch Schweißen an seinem Ende auf den vorspringenden Teil (61) des Plättchens (60) befestigt ist.

16. Abstandhaltergitter nach einem der Ansprüche 1 bis 15, aufweisend auf dem oberen Rand und dem unteren Rand seiner Einfassung (72, 72') Führungsflügel (73, 75), die in Richtung auf das Innere des Abstandhaltergitters umgelegt und durch halbmondförmige Ausnehmungen (74) des Rands der Einfassung getrennt sind, dadurch gekennzeichnet, daß die Führungsflügel (75) eines Rands der Einfassung (72) größere Abmessungen aufweisen als diejenigen der halbmondförmigen Ausnehmungen (74) des anderen Rands der Einfassung (72).

17. Abstandhaltergitter nach einem der Ansprüche 1 bis 16, aufweisend zumindest eine Feder (64) mit einem aktiven Teil (64a) im Innern jeder der Zellen, um das Haltern eines Brennstabs sicherzustellen, dadurch gekennzeichnet, daß jede der Federn (64) jeder der Zellen des Abstandhaltergitters einen einzigen aktiven Teil (64a) vorspringend zum Innern einer Zelle des Abstandhaltergitters umfaßt.

18. Abstandhaltergitter nach Anspruch 17, dadurch gekennzeichnet, daß jede der Federn (64) auf einem Plättchen (65) des Abstandhaltergitters befestigt ist, in das zwei Fenster (66, 67) für den Eingriff und die Befestigung durch Schweißen von übereinander angeordneten zwei Federarmen (64) in Nadelform eingebracht bzw. geschnitten sind, die so angeordnet sind, das sie auf einem Teil des Plättchens (65) reiten, und zwei Fenster (69, 69') zum Eingriff für die zwei Vorsprünge (68, 68') eines Federarms (64), der sich in Gegenüberlage zu der Feder befindet, die den aktiven Teil (64a) aufweist.

19. Abstandhaltergitter nach einem der Ansprüche 1 bis 18, dessen Kanten (8a, 8b) der zueinander parallelen Zellen jeweils durch die Schnittlinie von zwei Plättchen gebildet sind, die ein Kreuz (7a, 7b, 7c, 7d) bilden, das durch vier Zweiflache gebildet ist, welche eine Kante gemeinsam für vier Zellen aufweisen, dadurch gekennzeichnet, daß die Plättchen (2, 2', 3, 3') untereinander paarweise auf Höhe von jeder der Kanten (8a, 8b) entlang einer ersten Halbierungsebene (14, 14') von zwei gegenüberliegenden Zweiflachen geschweißt sind, und zwar in einer ersten Endzone der Kante (8a, 8b) sowie entlang einer zweiten Halbierungsebene (15, 15') von zwei weiteren gegenüberliegenden Zweiflachen, und zwar in einer zweiten Endzone der Kante (8a, 8b) des Kreuzes in Gegenüberlage zu dem ersten.

20. Abstandhaltergitter nach Anspruch 19, dadurch gekennzeichnet, daß für jede der Zellen des Abstandhaltergitters (1, 101) die Plättchen (2, 2', 3, 3'), welche zwei Kreuze (7b, 7c) benachbart in bezug auf ein erstes Kreuz (7a) bildeten, untereinander entlang einer Ebene parallel zu der zweiten Halbierungsebene (15, 15') in einer ersten Endzone ihrer Kante (8a, 8b) in Gegenüberlage zu der ersten Endzone der Kante (8a) des ersten Kreuzes (7a) und entlang einer Ebene parallel zu der ersten Halbierungsebene (14, 14') in einer zweiten Endzone geschweißt sind, die in Gegenüberlage zu der zweiten Endzone der Kante (8a) des ersten Kreuzes (7a) angeordnet ist.

21. Abstandhaltergitter nach Anspruch 19 oder 20, dadurch gekennzeichnet, daß die Plättchen (2, 2', 3, 3') der Abstandhaltergitter (1, 101) miteinander gemäß einer der folgenden Techniken verschweißt sind: Laserstrahlschweißen, Elektronenstrahlschweißen.

22. Abstandhaltergitter nach einem der Ansprüche 19, 20 und 21, deren Plättchen entlang den Kanten (18a, 18b) der Kreuze, die gebildet sind durch den Zusammenbau von zwei Plättchen eines Eingriffschlitzes (19a, 19b) über eine Länge entsprechend im wesentlichen der halben Länge der Plättchen (18) und Halterungsmittel (20a, 20'a, 20b, 20'b) für die Plättchen (18) umfassen, die ein Kreuz in Form von Vertiefungen bilden, die gewonnen sind durch Freischneiden und Heraustreiben des Metalls des Plättchens (18), dadurch gekennzeichnet, daß jedes der Plättchen außerdem zwischen dem Eingriffschlitz (19a, 19b) und den Halterungsmitteln (20, 20'a, 20b, 20'b) Einheiten (21a, 21b) von freigeschnittenen und über die Ebenen der Seiten der Plättchen (18) herausgetriebenen Zungen bilden.

23. Kernreaktor-Brennstabbündel mit einem Gerüst, das gebildet ist durch zueinander parallel verlaufenden Führungsrohren (44, 102), Abstandhaltergittern (1, 101), die entlang der Länge der Führungsrohre (44, 102) verteilt sind, und Endansätzen (103), die am Ende der Führungsrohre (44, 102) befestigt sind, dadurch gekennzeichnet, daß zumindest ein Teil der Abstandhaltergitter (1, 101) für die Bündel (1, 101) Abstandhaltergitter nach einem der Ansprüche 1 bis 22 sind.

24. Brennstabbündel nach Anspruch 23, dadurch gekennzeichnet, daß es Endgitter (106) zur axialen Halterung von Brennstäben des Bündels umfaßt.

25. Brennstabbündel nach Anspruch 23 oder 24, dadurch gekennzeichnet, daß es außerdem zusätzliche Mischgitter (105) aufweist, die jeweils zwischen zwei Abstandhaltergittern (101) oder einem Abstandhaltergitter (101) und einem Endgitter (106) angeordnet sind, und zwar für das Brennstabbündel, welches den oberen Teil des Gitters in der Betriebsstellung des Brennstabbündels im Kernreaktor bildet.

26. Brennstabbündel nach Anspruch 25, dadurch gekennzeichnet, daß die zusätzlichen Mischgitter (105) zumindest zwei Sätze von gekreuzten Plättchen (107, 107') umfassen, welche die Zellen (108) begrenzen, welche entweder einen Brennstab oder ein Führungsrohr aufnehmen und mit Anschlagmitteln versehen sind, die zum Innern der Zellen vorspringen, die dazu bestimmt sind, Brennstäbe aufzunehmen, wobei die Anschlagmittel auf jeder Wand unter Trennung von zwei innenliegenden Zellen, welche durch die Brennstäbe besetzt sind, zwei Abschnitte (109, 110) von Plättchen aufweisen, die in Form von Schöpfkellen freigeschnitten und verformt sowie in der Umwälzrichtung des Reaktorkühlmittelfluids quer zum Brennstabbündel versetzt angeordnet sind, wobei die Schöpfkellenwölbungen in entgegengesetzter Richtung vorspringen und ausschließlich auf einer axialen Seite offen sind, um den Durchfederungsweg der Brennstäbe zu begrenzen und um das Kühlfluid von einer Zelle zur anderen hindurchtreten zu lassen.

27. Brennstabbündel nach einem der Ansprüche 25 und 26, dadurch gekennzeichnet, daß die zusätzlichen Mischgitter (105) Wände (112) aufweisen, welche die Zellen für die Brennstäbe begrenzen, auf denen durch Freischneiden und Heraustreiben von Metall der Wand elastische Vorsprünge (114) in Form von Brücken verwirklicht sind, die in Gegenüberlage zu starren Vorsprüngen (117) angeordnet sind, die auf den Wänden in Gegenüberlage zu den Zellen des Gitters vorgesehen sind.

28. Brennstabbündel nach Anspruch 27, dadurch gekennzeichnet, daß die elastischen "Brücken"-Vorsprünge von der Wand (112) an einem ihrer Enden durch einen Freischnitt (115) abgetrennt sind.

29. Brennstabbündel nach einem der Ansprüche 24 bis 28, dadurch gekennzeichnet, daß die Halterungsendgitter (106) vollständig aus martensitischem Stahl hergestellt sind und Federn aufweisen, die im bzw. aus dem Metall des Abstandhaltergitters gebildet sind.

30. Brennstabbündel nach einem der Ansprüche 24 bis 29, dadurch gekennzeichnet, daß das obere Endgitter (106) des Brennstabbündels gleitend auf den Führungsrohren angebracht ist.

## Claims

1. Spacing grid of a fuel assembly for a nuclear reactor made of criss-crossing metallic plates (2, 2', 3, 3') delimiting a regular network of cells (5, 6, 6a) of a prismatic form, one part of which comprises, in each cell, at least one retaining spring (12, 13, 23, 35, 35') for a fuel rod (30, 30') intended to be accommodated in the cell, the spring being disposed on a wall of the cell formed by a part of a metallic plate and having an active part projecting towards the interior of the cell with respect to the wall, characterised in that for one part at least of the cells of the spacing grid (1), at least one flat wall, on which there is fixed a spring (23, 35, 35'), comprises at least one stop device (26, 26', 36, 36a, 36b) having a flat part approximately parallel to the wall of the cell on which the spring (23, 25, 25') is fixed, projecting in the interior of the cell, in such a way as to limit the bottoming of a fuel rod (30, 30') accommodated in the cell.

2. Spacing grid according to claim 1, characterised in that the stop device (26, 26', 36, 36a, 36b) is obtained by cutting and embossing of the wall of the cell.

3. Spacing grid according to any of the claims 1 and 2, of a polygonal form having angle cells (6a) disposed in each of the angles of the grid (1) comprising two successive walls formed by parts, disposed at an angle, of a peripheral band (4) of the grid (1) and two walls facing the band (4) each carrying a spring (35), characterised in that each of the walls situated facing the band (4) comprises at least one stop device (36) projecting in the interior of the cell (6a) and in that only the angle cells (6a) comprise stop devices (6a) for limiting the bottoming of a fuel rod accommodated in an angle cell (6a).

4. Spacing grid according to any of the claims 1 and 2, having an assembly of peripheral cells (6) each comprising at least one external wall formed by a part of a peripheral band (4) of the grid (1) and an internal wall facing the band (4), characterised in that the internal wall of each of the peripheral cells, said wall situated facing the band (4), comprises at least one stop device (26, 36, 36a) projecting in the intenor of the cell (6) and in that, only the peripheral cells of the spacing grid, comprise stop devices (26, 36, 36a) for limiting the bottoming of the fuel rods disposed in the peripheral cells (6).

5. Spacing grid according to any of the claims 1 to 4, characterised in that the plate (22) on which the spring (23) is disposed is cut and embossed in two zones (26, 26') forming stop devices on both sides of each of the ends of the spring (23), the support faces of the stop devices (26, 26') being at a distance from the internal face of the wall of the peripheral cell (31) which is less than the deflection of an active part of the spring (23).

6. Spacing grid according to any of the claims 1 to 4, characterised in that the wall (33) on which the spring (35) is disposed is cut and embossed to form a stop device (36), in a zone situated between an active part of the spring (35) and the wall of the cell (31) on which the spring (35) is disposed.

7. Spacing grid according to claim 6, characterised in that the wall (33) of the cell (31, 31') on which the spring (35') is disposed is cut and embossed to form two stop devices (36a, 36b) in the form of flattened spherical half-caps projecting into two adjoining cells (31, 31') separated by the plate (33), in zones each situated between an active part of the spring (35') and the wall (33) of the cells (31, 31').

8. Spacing grid according to any of the claims 1 to 7, characterised in that the spring (35') comprises a flat zone for support on a fuel rod (30, 30') in its active part projecting in the interior of the cell (31, 31') of the grid.

9. Spacing grid according to any of the claims 1 to 8 comprising an assembly of cells intended to each receive a guide tube of the fuel assembly, characterised in that the cells of the spacing grids intended to receive a guide tube (44, 102) comprise on each of their walls formed by a part of a plate (40, 40') an embossed zone with respect to the wall formed by the plate (40, 40'), having a cylindrical surface (42, 42') which is concave as directed towards the interior of the cell receiving the guide tube (44, 102).

10. Spacing grid according to claim 9, characterised in that the wall of the cell which is formed by a plate (40) is embossed towards the interior of the cell receiving the guide tube to form the cylindrical surface (42) and in a direction opposite to the interior of a cell adjacent to the cell intended to receive the guide tube (44, 102) to form a support boss (43) of a fuel rod facing a part of the cylindrical surface (42).

11. Spacing grid according to claim 9, characterised in that the wall of the cell formed by a part of the plate (40') is embossed towards the exterior of the cell intended to receive the guide tube to form the cylindrical surface (42') and comprises a support boss (43') of a fuel rod in the shape of part of the spherical cap projecting in the interior of a cell adjacent to the cell intended to receive a guide tube.

12. Spacing grid according to any of the claims 9, 10 and 11, characterised in that in each of the cells intended to receive a guide tube (44), the guide tube (44) is fixed by spot welding on the plates forming the walls of the cell, in the cylindrical shaped embossed zones (42, 42') or on a projecting part (49) of the plate at the upper part or the lower part of the spacing grid.

13. Spacing grid according to any of the claims 1 to 12, the plates (51, 52, 51', 52') of which comprise, at the level of each of the cells (50) of the grid and following one of their longitudinal edges, a blade (53, 53') for mixing of cooling fluid of the fuel assembly, folded down towards the interior of the cell (50), characterised in that the mixing blades (53, 53', 55) which are folded down towards the interior of the cell are constructed so as not to be superimposed in a longitudinal direction of the cell (50) with support bosses (54, 54', 56) projecting in the interior of the cell (50).

14. Spacing grid according to claim 13, characterised in that the bosses (56) have a reduced dimension, the mixing blades having an increased dimension.

15. Spacing grid according to any of the claims 1 to 14, comprising a peripheral band (4) having, on at least one of its edges, guiding blades (59) for the fuel assembly adjacent to a plate (60) of the spacing grid, characterised in that the plate (60) comprises a part (61) projecting with respect to one of its edges adjacent to the guiding blade (59), and in that the guiding blade (59) is fixed by welding at its end on the projecting part (61) of the plate (60).

16. Spacing grid according to any of the claims 1 to 15, comprising on the upper edge and on the lower edge of its band (72, 72'), guiding blades (73, 75) folded towards the interior of the spacing grid and separated by curved cuts (74) on the edge of the band, characterised in that the guide blades (75) on one edge of the band (72) have dimensions greater than those of the curved cuts (74) on the other edge of the band (72).

17. Spacing grid according to any of the claims 1 to 16, comprising at least one spring (64) having an active part (64a) in the interior of each of the cells to ensure the retaining of a fuel rod, characterised in that each of the springs (64) of each of the cells of the spacing grids comprises a single active part (64a), projecting in the interior of a cell of the spacing grid.

18. Spacing grid according to claim 17, characterised in that each of the springs (64) is fixed on a plate (65) of the spacing grid which is pierced by two slots (66, 67) for the engagement and the fixing by welding one to the other of the two spring legs (64) in the form of a pin, said legs being arranged such as to overlap a part of the plate (65), and pierced by two slots (69, 69') for the engagement of two bosses (68, 68') of a spring leg (64) in opposition to the spring leg comprising the active part (64a).

19. Spacing grid according to any of the claims 1 to 18, the edges (8a, 8b) of the cells of which are parallel to each other and are each formed by the intersection of two plates forming a cross-piece (7a, 7b, 7c, 7d) forming four dihedrons having in common one edge common to four cells, characterised in that the plates (2, 2', 3, 3') are welded to each other in pairs at the level of each of the edges (8a, 8b) according to a first bisecting plane (14, 14') of two opposite dihedrons, in a first end zone of the edge (8a, 8b) and following a second bisecting plane (15, 15') of the two other opposite dihedrons, in a second end zone of the edge (8a, 8b) of the cross-piece opposite to the first end zone.

20. Spacing grid according to claim 19, characterised in that for each of the cells of the spacing grid (1, 101) the plates (2, 2', 3, 3'), forming two cross-pieces (7b, 7c) which are adjacent with respect to a first cross-piece (7a), are welded to each other following a parallel plane to the second bisecting plane (15, 15') in a first end zone of their edge (8a, 8b), facing the first end zone of the edge (8a) of the first cross-piece (7a) and following a parallel plane to the first bisecting plane (14, 14') in a second end zone situated facing the second end zone of the edge (8a) of the first cross-piece (7a).

21. Spacing grid according to any of the claims 19 and 20, characterised in that the plates (2, 2', 3, 3') of the spacing grids (1, 101) are welded to each other by one of the techniques: welding by laser beam, welding by electron beam.

22. Spacing grid according to any of the claims 19, 20 and 21, the plates of which comprise, following the edges (18a, 18b) of the cross-pieces each formed by the assembly of two plates, an engagement slit (19a, 19b) of a length corresponding approximately to half the width of the plate (18) and retaining means (20a, 20'a, 20b, 20'b) for the plates (18) forming a cross-piece in the form of recesses obtained by cutting and embossing of the metal of the plate (18), characterised in that each of the plates comprises also, between the engagement slit (19a, 19b) and the retaining means (20a, 20'a, 20b, 20'b), assemblies (21a, 21b) of cut and embossed tongues on the outside of the planes of the faces of the plate (18).

23. Fuel assembly for a nuclear reactor comprising a frame made from guide tubes (44, 102) which are parallel to each other, from the spacing grids (1, 101) distributed according to the length of the guide tubes (44, 102) and from end joining pieces (103) fixed to the end of the guide tubes (44, 102), characterised in that at least a part of the spacing grids of the assembly (1, 101) are spacing grids according to any of the claims 1 to 22.

24. Fuel assembly according to claim 23, characterised in that it comprises end grids (106) for the axial retaining of the fuel rods of the assembly.

25. Fuel assembly according to any of the claims 23 or 24, characterised in that it comprises also additional mixing grids (105), each intercalated between two spacing grids (101) or a spacing grid (101) and an end grid (106), of the fuel assembly forming the upper part of the frame in the operating position of the fuel assembly in the nuclear reactor.

26. Fuel assembly according to claim 25, characterised in that the additional mixing grids (105) comprise at least two sets of criss-crossing plates (107, 107') which delimit cells (108) receiving either a fuel rod or a guide tube and are supplied with stop means projecting towards the interior of the cells intended to receive fuel rods, the stop means comprising on each wall which separates two internal cells occupied by fuel rods, two parts of plates (109, 110) which are cut and shaped in the form of scoops and are offset in the direction of the circulation of the cooling fluid of the reactor across the fuel assembly, the projections of which are in the opposite direction and open only on one axial side in order to limit the bottoming of the fuel rods and to allow the cooling fluid to pass from one cell to another.

27. Fuel assembly according to any of the claims 25 and 26, characterised in that the additional mixing grids (105) comprising the walls (112) delimit cells for fuel rods on which, by cutting and embossing of the metal of the wall, resilient bosses (114) are constructed in the form of bridges disposed facing the rigid bosses (117) provided on the walls opposite the cells of the grid.

28. Fuel assembly according to claim 27, characterised in that the resilient "bridge" bosses are detached from the wall (112), at one of their ends by a cut (115).

29. Fuel assembly according to any of the claims 24 to 28, characterised in that the grids of the retaining end (106) are made completely from martensitic steel and comprise springs formed in the metal of the retaining spacing grid.

30. Fuel assembly according to any of the claims 24 to 29, characterised in that the upper end of the grid (106) of the fuel assembly is mounted to slide on the guide tubes (102).
